(19) Europäisches Patentamt
European Patent Office
Office européen des brevets

(11) EP 4 442 714 A1

(12) EUROPEAN PATENT APPLICATION
published in accordance with Art. 153(4) EPC

(43) Date of publication:
**09.10.2024 Bulletin 2024/41**

(21) Application number: **22901126.7**

(22) Date of filing: **18.11.2022**

(51) International Patent Classification (IPC):
***C08F 4/80*** *(2006.01)* ***C08F 10/02*** *(2006.01)*

(52) Cooperative Patent Classification (CPC):
**C08F 4/80; C08F 10/02**

(86) International application number:
**PCT/JP2022/042873**

(87) International publication number:
**WO 2023/100693 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.12.2021 JP 2021195606**

(71) Applicants:
- **The University of Tokyo**
  **Bunkyo-ku, Tokyo 113-8654 (JP)**
- **Resonac Corporation**
  **Tokyo 105-7325 (JP)**
- **Japan Polyethylene Corporation**
  **Tokyo 100-8251 (JP)**

(72) Inventors:
- **NOZAKI, Kyoko**
  **Tokyo 113-8654 (JP)**
- **SEIDEL, Falk William**
  **Tokyo 113-8654 (JP)**
- **AKITA, Shumpei**
  **Tokyo 113-8654 (JP)**
- **KIMURA, Kento**
  **Oita-shi, Oita 870-0189 (JP)**
- **KURODA, Junichi**
  **Oita-shi, Oita 870-0189 (JP)**
- **UEMATSU, Masahiro**
  **Kawasaki-shi, Kanagawa 210-8548 (JP)**
- **SAKURAGI, Tsutomu**
  **Yokkaichi-shi, Mie 510-0848 (JP)**

(74) Representative: **Strehl Schübel-Hopf & Partner**
**Maximilianstrasse 54**
**80538 München (DE)**

# (54) CATALYST FOR OLEFIN POLYMERIZATION AND PRODUCTION METHOD FOR OLEFIN-BASED POLYMER

(57) Provided are a catalyst and a method that enable the production of an olefin-based polymer, which has a polar group and is usable for various applications, at high catalytic activity. A metal complex shown in general formula (C1) (in the formula, M represents a palladium atom or a nickel atom, X represents a phosphorus atom (P), $R^5$-$R^9$ are as set forth in the claims, L represents an electron donating ligand, and q is 0, 1/2, 1, or 2) is used as a catalyst for polymerization of an olefin having a polar group.

## Description

TECHNICAL FIELD

The present invention relates to a catalyst for olefin polymerization and a method for producing an olefin-based polymer, particularly a polymer of a polar group-containing monomer such as an allyl compound having a polar group.

BACKGROUND ART

A copolymer of an olefin such as ethylene or propylene, which is a non-polar monomer, and a vinyl monomer having a polar group has functions and characteristics not found in polyethylene or polypropylene, which is non-polar, and such a copolymer is used in a wide range of fields. In particular, an ethylene-vinyl alcohol copolymer (EVOH) is a copolymer composed of an ethylene monomer structural unit and a vinyl alcohol monomer structural unit and is produced by saponifying an ethylene-vinyl acetate copolymer obtained by radical copolymerization of ethylene and vinyl acetate. EVOH is used in a wide range of fields such as food packaging for its advantage of excellent gas barrier properties.

Meanwhile, polymerization of a monomer having an allyl group is more difficult than that of a common vinyl monomer, and a polymer thereof is hardly known. A main reason for this is that in a case where a monomer having an allyl group is subjected to radical polymerization, a growth reaction of the polymer is extremely slow due to a degenerative chain transfer reaction to the monomer by abstraction of a hydrogen atom present on the carbon at the allyl position, and only an oligomer having a low degree of polymerization is obtained (Chem. Rev. 58, 808 (1958); Non-Patent Literature 1).

JP 2011-68881 A (US 8916663; Patent Literature 1), JP 2014-159540 A (US 9499644; Patent Literature 2), JP 2015-137282 A (Patent Literature 3), WO 2019/093364 (Patent Literature 4) and WO 2020/175482 (Patent Literature 5), and J. Am. Chem. Soc., 133, 1232 (2011) (Non-Patent Literature 2) disclose coordination copolymerization of ethylene and a polar group-containing allyl monomer using a metal complex catalyst of Group 10 of the periodic table, and have succeeded in synthesizing a copolymer of a polar group-containing allyl monomer which could not be obtained by the radical polymerization method. However, in known production methods, the catalytic activity is insufficient, and there remains an issue in industrialization from the viewpoint of a catalyst cost and the like.

CITATION LIST

PATENT LITERATURE

Patent Literature 1: JP 2011-068881 A
Patent Literature 2: JP 2014-159540 A
Patent Literature 3: JP 2015-137282 A
Patent Literature 4: WO 2019/093364
Patent Literature 5: WO 2020/175482

NON-PATENT LITERATURE

Non-Patent Literature 1: Chem. Rev. 58, 808 (1958)
Non-Patent Literature 2: J. Am. Chem. Soc., 133, 1232 (2011)

SUMMARY OF INVENTION

TECHNICAL PROBLEM

The present invention is directed to providing a catalyst and a method capable of producing an olefin-based polymer having a polar group applicable to various applications with high catalytic activity.

SOLUTION TO PROBLEM

As a result of intensive studies to solve the above issue, the present inventors have found that an olefin-based

polymer having a polar group applicable to various applications can be produced with high catalytic activity by copolymerizing a vinyl monomer (non-polar olefin) such as ethylene or propylene alone or the non-polar olefin and a polar group-containing olefin (including an allyl monomer having a polar group) using a novel Group 10 metal complex of the periodic table as a catalyst, and have completed the present invention.

That is, the present invention relates to a catalyst for olefin polymerization of the following [1] to [5] and a method for producing a (co)polymer of ethylene of the following [6] to [12].

[1] A catalyst for olefin polymerization, including a metal complex represented by General Formula (C1):

[Chem. 1]

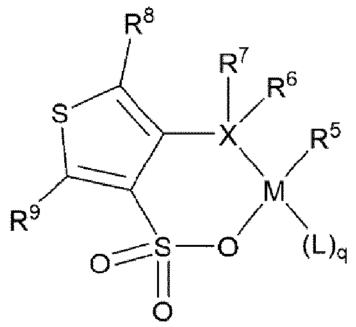

(C1)

where in General Formula (C1), M represents a palladium atom or a nickel atom; X represents a phosphorus atom (P); $R^5$ represents a substituent selected from the group consisting of a hydrogen atom, a halogen atom, a hydrocarbon group having 1 to 30 carbon atoms, a hydrocarbon group having 1 to 30 carbon atoms substituted with a halogen atom, a hydrocarbon group having 2 to 30 carbon atoms substituted with an alkoxy group having 1 to 10 carbon atoms, a hydrocarbon group having 7 to 30 carbon atoms substituted with an aryloxy group having 6 to 20 carbon atoms, a hydrocarbon group having 3 to 30 carbon atoms substituted with an amido group having 2 to 10 carbon atoms, an alkoxy group having 1 to 30 carbon atoms, an aryloxy group having 6 to 30 carbon atoms, and an acyloxy group having 2 to 10 carbon atoms; $R^6$ and $R^7$ each independently represent an alkoxy group, an aryloxy group, a silyl group, an amino group, or a hydrocarbon group having 1 to 180 carbon atoms optionally substituted with one or more groups selected from a hydroxy group, a halogen atom, an alkoxy group, an aryloxy group, and an acyloxy group; $R^8$ and $R^9$ each independently represent a hydrogen atom or a halogen atom; and L represents an electron-donating ligand, and q is 0, 1/2, 1, or 2.

[2] The catalyst for olefin polymerization according to [1], wherein $R^8$ and $R^9$ in General Formula (C1) are each independently a hydrogen atom or a chlorine atom.

[3] The catalyst for olefin polymerization according to [2], wherein one of $R^8$ and $R^9$ in General Formula (C1) is a hydrogen atom, and the other is a chlorine atom.

[4] The catalyst for olefin polymerization according to [2], wherein both of $R^8$ and $R^9$ in General Formula (C1) are chlorine atoms.

[5] The catalyst for olefin polymerization according to any one of [1] to [4], wherein $R^6$ and $R^7$ in General Formula (C1) are each independently an alkyl group, a fluoroalkyl group, a cycloalkyl group optionally having a substituent, an aralkyl group optionally having a substituent, or an aryl group optionally having a substituent.

[6] The catalyst for olefin polymerization according to any one of [1] to [5], wherein both of $R^6$ and $R^7$ in General Formula (C1) are isopropyl groups, t-butyl groups, menthyl groups, 2,7-di-t-butyl-9-fluorenyl groups, diphenylmethyl groups, 2-methoxyphenyl groups, or 2-isopropylphenyl groups.

[7] A method for producing an ethylene homopolymer, a copolymer of ethylene and an olefin having a polar group, or a copolymer of ethylene, the olefin having a polar group, and another monomer, the method including using a metal complex represented by General Formula (C1) as a polymerization catalyst:

[Chem. 2]

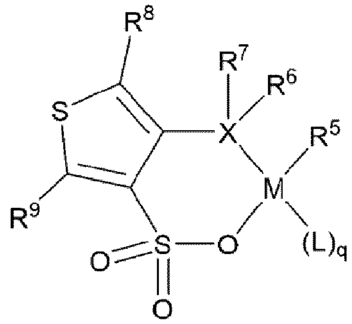

(C1)

where in General Formula (C1), symbols represent the same meanings as in [1], and the olefin is represented by General Formula (1):

[Chem. 3]

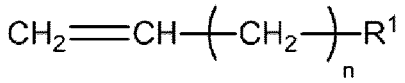

(1)

where in General Formula (1), $R^1$ represents a substituent selected from the group consisting of a hydroxy group, an alkoxy group having 1 to 10 carbon atoms, an aryloxy group having 6 to 20 carbon atoms, an acyl group having 2 to 10 carbon atoms, an ester group having 2 to 10 carbon atoms (oxycarbonyl group; R-O-(C=O)-, R represents an organic group), an acyloxy group having 2 to 10 carbon atoms, an amino group, a substituted amino group having 1 to 12 carbon atoms, a substituted amido group having 2 to 12 carbon atoms, a substituted pyridyl group having 5 to 10 carbon atoms, a substituted pyrrolidyl group having 4 to 10 carbon atoms, a substituted piperidyl group having 5 to 10 carbon atoms, a substituted hydrofuryl group having 4 to 10 carbon atoms, a substituted imidazolyl group having 4 to 10 carbon atoms, a mercapto group, an alkylthio group having 1 to 10 carbon atoms, an arylthio group having 6 to 10 carbon atoms, an epoxy group, and a halogen atom, and n is an integer selected from 0 to 6.

[8] The method according to [7], wherein n in General Formula (1) is 0.

[9] The method according to [7], wherein n in General Formula (1) is 1.

[10] The method according to any one of [7] to [9], wherein $R^8$ and $R^9$ in General Formula (C1) are each independently a hydrogen atom or a chlorine atom.

[11] The method according to [10], wherein one of $R^8$ and $R^9$ in General Formula (C1) is a hydrogen atom, and the other is a chlorine atom.

[12] The method according to [10], wherein both of $R^8$ and $R^9$ in General Formula (C1) are chlorine atoms.

[13] The method according to any one of [7] to [12], wherein $R^6$ and $R^7$ in General Formula (C1) are each independently an alkyl group, a fluoroalkyl group, a cycloalkyl group optionally having a substituent, an aralkyl group optionally having a substituent, or an aryl group optionally having a substituent.

[14] The method according to any one of [7] to [13], wherein both of $R^6$ and $R^7$ in General Formula (C1) are isopropyl groups, t-butyl groups, menthyl groups, 2,7-di-t-butyl-9-fluorenyl groups, diphenylmethyl groups, 2-methoxyphenyl groups, or 2-isopropylphenyl groups.

## ADVANTAGEOUS EFFECTS OF INVENTION

According to the present invention, there are provided a catalyst and a method capable of producing an olefin-based polymer having a polar group, which can be used in various applications, with high catalytic activity. For example, when a non-polar olefin (ethylene) and an olefin having a polar group such as an allyl monomer having a polar group are copolymerized using the catalyst for olefin polymerization of the present invention, an olefin-based polymer having a polar group, which can be used in various applications, can be produced at a low cost.

DESCRIPTION OF EMBODIMENTS

[Catalyst]

A catalyst including a palladium-metal complex or a nickel-metal complex to be used in the present invention is represented by General Formula (C1):

[Chem. 4]

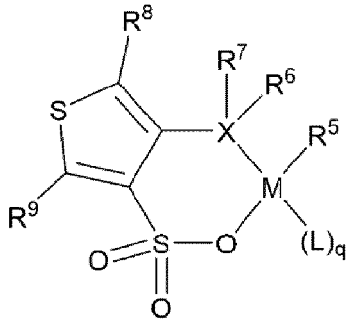

(C1)

In the formula, M represents a palladium atom or a nickel atom, and X represents a phosphorus atom (P). $R^5$ represents a substituent selected from the group consisting of a hydrogen atom, a halogen atom, a hydrocarbon group having 1 to 30 carbon atoms, a hydrocarbon group having 1 to 30 carbon atoms substituted with a halogen atom, a hydrocarbon group having 2 to 30 carbon atoms substituted with an alkoxy group having 1 to 10 carbon atoms, a hydrocarbon group having 7 to 30 carbon atoms substituted with an aryloxy group having 6 to 20 carbon atoms, a hydrocarbon group having 3 to 30 carbon atoms substituted with an amido group having 2 to 10 carbon atoms, an alkoxy group having 1 to 30 carbon atoms, an aryloxy group having 6 to 30 carbon atoms, and an acyloxy group having 2 to 10 carbon atoms. $R^6$ and $R^7$ each independently represent an alkoxy group, an aryloxy group, a silyl group, an amino group, or a hydrocarbon group having 1 to 180 carbon atoms optionally substituted with one or more groups selected from a hydroxy group, a halogen atom, an alkoxy group, an aryloxy group, and an acyloxy group. $R^8$ and $R^9$ each independently represent a hydrogen atom or a halogen atom. L represents an electron-donating ligand, and q is 0, 1/2, 1, or 2.

As used herein, the term "hydrocarbon" includes saturated and unsaturated aliphatic hydrocarbons, as well as aromatic hydrocarbons.

Hereinafter, a structure of General Formula (C1) will be described.

M represents a palladium atom (Pd) or a nickel atom (Ni). A palladium atom (Pd) is more preferable from the viewpoint of catalytic activity and the molecular weight of a resulting polymer.

X is a phosphorus atom (P) and is two electron-coordinated to the central metal M.

$R^5$ represents a substituent selected from the group consisting of a hydrogen atom, a halogen atom, a hydrocarbon group having 1 to 30 carbon atoms, a hydrocarbon group having 1 to 30 carbon atoms substituted with a halogen atom, a hydrocarbon group having 2 to 30 carbon atoms substituted with an alkoxy group having 1 to 10 carbon atoms, a hydrocarbon group having 7 to 30 carbon atoms substituted with an aryloxy group having 6 to 20 carbon atoms, a hydrocarbon group having 3 to 30 carbon atoms substituted with an amido group having 2 to 10 carbon atoms, an alkoxy group having 1 to 30 carbon atoms, an aryloxy group having 6 to 30 carbon atoms, and an acyloxy group having 2 to 10 carbon atoms.

Preferable specific examples of the halogen atom as represented by $R^5$ include a fluorine atom, a chlorine atom, and a bromine atom. Among these, a chlorine atom is preferable.

The hydrocarbon group having 1 to 30 carbon atoms as represented by $R^5$ is preferably a hydrocarbon group having 1 to 13 carbon atoms. As the hydrocarbon group, an alkyl group, a cycloalkyl group, an aryl group, and an aralkyl group are preferable, and an alkyl group and an aralkyl group are more preferable. Preferable specific examples thereof include a methyl group, an ethyl group, a 1-propyl group, a 1-butyl group, a 1-pentyl group, a 1-hexyl group, a 1-heptyl group, a 1-octyl group, a 1-nonyl group, a 1-decyl group, a t-butyl group, a tricyclohexylmethyl group, a 1,1-dimethyl-2-phenylethyl group, an isopropyl group, a 1,1-dimethylpropyl group, a 1,1,2-trimethylpropyl group, a 1,1-diethylpropyl group, a 1-phenyl-2-propyl group, an isobutyl group, a 1,1-dimethylbutyl group, a 2-pentyl group, a 3-pentyl group, a 2-hexyl group, a 3-hexyl group, a 2-ethylhexyl group, a 2-heptyl group, a 3-heptyl group, a 4-heptyl group, a 2-propylheptyl group, a 2-octyl group, a 3-nonyl group, a cyclopropyl group, a cyclobutyl group, a cyclopentyl, a methylcyclopentyl group, a cyclohexyl group, a methylcyclohexyl group, a cycloheptyl group, a cyclooctyl group, a cyclododecyl group, a

1-adamantyl group, a 2-adamantyl group, an exo-norbornyl group, an endo-norbornyl group, a 2-bicyclo[2.2.2]octyl group, a nopinyl group, a decahydronaphthyl group, a menthyl group, a neomenthyl group, a neopentyl group, a 5-decyl group, a phenyl group, a naphthyl group, an anthracenyl group, a fluorenyl group, a tolyl group, a xylyl group, a benzyl group, and a p-ethylphenyl group. Among these, a methyl group and a benzyl group are more preferable, and a methyl group is particularly preferable.

The hydrocarbon group having 1 to 30 carbon atoms substituted with a halogen atom as represented by $R^5$ is preferably a group obtained by substituting the above-described hydrocarbon group having 1 to 30 carbon atoms with fluorine, chlorine, or bromine, and preferable specific examples thereof include a trifluoromethyl group and a pentafluorophenyl group.

The hydrocarbon group having 2 to 30 carbon atoms substituted with an alkoxy group having 1 to 10 carbon atoms as represented by $R^5$ is preferably a group obtained by substituting the above-described hydrocarbon group having 1 to 30 carbon atoms with a methoxy group, an ethoxy group, an isopropoxy group, a 1-propoxy group, a 1-butoxy group, or a t-butoxy group. A hydrocarbon group having 2 to 6 carbon atoms substituted with a methoxy group or an ethoxy group is more preferable. Specific examples thereof include a 1-(methoxymethyl)ethyl group, a 1-(ethoxymethyl)ethyl group, a 1-(phenoxymethyl)ethyl group, a 1-(methoxyethyl)ethyl group, a 1-(ethoxyethyl)ethyl group, a di(methoxymethyl)methyl group, a di(ethoxymethyl)methyl group, and a di(phenoxymethyl)methyl group. A 1-(methoxymethyl)ethyl group and a 1-(ethoxymethyl)ethyl group are particularly preferable.

The hydrocarbon group having 7 to 30 carbon atoms substituted with an aryloxy group having 6 to 20 carbon atoms as represented by $R^5$ is preferably a group obtained by substituting the above-described hydrocarbon group having 1 to 30 carbon atoms with a phenoxy group, a 4-methylphenoxy group, a 4-methoxyphenoxy group, a 2,6-dimethylphenoxy group, or a 2,6-di-t-butylphenoxy group. A hydrocarbon group having 1 to 6 carbon atoms substituted with a phenoxy group or a 2,6-dimethylphenoxy group is more preferable, and a 1-(phenoxymethyl)ethyl group and a 1-(2,6-dimethylphenoxymethyl)ethyl group are particularly preferable.

The hydrocarbon group having 3 to 30 carbon atoms substituted with an amido group having 2 to 10 carbon atoms (R-(C=O)NH-, R is an organic group) as represented by $R^5$ is preferably a substituent obtained by substituting the above-described hydrocarbon group having 1 to 30 carbon atoms with an acetamido group, a propionylamino group, a butyrylamino group, an isobutyrylamino group, a valerylamino group, an isovalerylamino group, a pivaloylamino group, or a benzoylamino group. A 2-acetamidophenyl group, a 2-propionylaminophenyl group, a 2-valerylaminophenyl group, and a 2-benzoylaminophenyl group are more preferable, and a 2-acetamidophenyl group is particularly preferable.

The alkoxy group having 1 to 30 carbon atoms as represented by $R^5$ is preferably an alkoxy group having 1 to 6 carbon atoms. Preferable specific examples thereof include a methoxy group, an ethoxy group, an isopropoxy group, a 1-propoxy group, a 1-butoxy group, and a t-butoxy group. Among these, a methoxy group, an ethoxy group, and an isopropoxy group are more preferable, and a methoxy group is particularly preferable.

The aryloxy group having 6 to 30 carbon atoms as represented by $R^5$ is preferably an aryloxy group having 6 to 12 carbon atoms. Preferable specific examples thereof include a phenoxy group, a 4-methylphenoxy group, a 4-methoxyphenoxy group, a 2,6-dimethylphenoxy group, and a 2,6-di-t-butylphenoxy group. Among these, a phenoxy group and a 2,6-dimethylphenoxy group are more preferable, and a phenoxy group is particularly preferable.

The acyloxy group having 2 to 10 carbon atoms as represented by $R^5$ is preferably an acyloxy group having 2 to 8 carbon atoms. Preferable specific examples thereof include an acetyloxy group, a propionyloxy group, a butyryloxy group, an isobutyryloxy group, a valeryloxy group, an isovaleryloxy group, a pivaloyloxy group, and a benzoyloxy group. Among these, an acetyloxy group, a propionyloxy group, and a benzoyloxy group are more preferable, and an acetyloxy group and a propionyloxy group are particularly preferable.

Among these preferable groups as $R^5$, a hydrocarbon group having 1 to 30 carbon atoms, an alkoxy group having 1 to 30 carbon atoms, a hydrocarbon group having 3 to 30 carbon atoms substituted with an amido group having 2 to 10 carbon atoms, and an acyloxy group having 2 to 10 carbon atoms are more preferable, and a hydrocarbon group having 1 to 30 carbon atoms is most preferable. Particularly preferable specific examples thereof include a methyl group, a benzyl group, a methoxy group, a 2-acetamidophenyl group, and an acetyloxy group.

$R^6$ and $R^7$ each independently represent an alkoxy group, an aryloxy group, a silyl group, an amino group, or a hydrocarbon group having 1 to 180 carbon atoms optionally substituted with one or more groups selected from a hydroxy group, a halogen atom, an alkoxy group, an aryloxy group, and an acyloxy group.

The alkoxy group as represented by $R^6$ and $R^7$ is preferably an alkoxy group having 1 to 20 carbon atoms, and examples thereof include a methoxy group, an ethoxy group, a propoxy group, and an isopropoxy group.

The aryloxy group as represented by $R^6$ and $R^7$ is preferably an aryloxy group having 6 to 24 carbon atoms, and examples thereof include a phenoxy group.

Examples of the silyl group as represented by $R^6$ and $R^7$ include a trimethylsilyl group. Examples of the amino group include an amino group, a methylamino group, and a dimethylamino group.

The halogen atom in the hydrocarbon group having 1 to 180 carbon atoms optionally substituted with one or more groups selected from a hydroxy group, a halogen atom, an alkoxy group, an aryloxy group, and an acyloxy group

as represented by $R^6$ and $R^7$ is a fluorine atom, a chlorine atom, or a bromine atom, and a fluorine atom is preferable. The alkoxy group is preferably an alkoxy group having 1 to 20 carbon atoms, and examples thereof include a methoxy group, an ethoxy group, a propoxy group, and an isopropoxy group. The aryloxy group is preferably an aryloxy group having 6 to 24 carbon atoms, and examples thereof include a phenoxy group. Examples of the acyloxy group include an acetyloxy group, a propionyloxy group, and a benzoyloxy group. The number of carbon atoms of the hydrocarbon group having 1 to 180 carbon atoms includes the number of carbon atoms of the above-described substituent.

Specific examples of the hydrocarbon group having 1 to 180 carbon atoms optionally substituted with one or more groups selected from a hydroxy group, a halogen atom, an alkoxy group, an aryloxy group, and an acyloxy group as represented by $R^6$ and $R^7$ include alkyl groups such as a methyl group, an ethyl group, an n-propyl group, an isopropyl group, an n-butyl group, an isobutyl group, a sec-butyl group, a t-butyl group, an n-pentyl group, a 2-pentyl group, a 3-pentyl group, a neopentyl group, a n-hexyl group, a 2-hexyl group, a 3-hexyl group, a 2-heptyl group, a 3-heptyl group, a 4-heptyl group, a 2-methyl-4-heptyl group, a 2,6-dimethyl-4-heptyl group, and a 3-methyl-4-heptyl group; fluoroalkyl groups such as a trifluoromethyl group, a pentafluoroethyl group, a heptafluoropropyl group, and a nonafluorobutyl group; cycloalkyl groups such as a cyclopropyl group, a cyclobutyl group, a cyclopentyl group, a cyclohexyl group, a cycloheptyl group, a cyclooctyl group, a menthyl group, a 1-adamantyl group, and a 2-adamantyl group; aralkyl groups such as a benzyl group, a 2'-methoxybenzyl group, a 3'-methoxybenzyl group, a 4'-methoxybenzyl group, a 4'-trifluoromethylbenzyl group, a 9-fluorenyl group, a 2,7-di-t-butyl-9-fluorenyl group, and a diphenylmethyl group; and aryl groups such as a phenyl group, a 2-methylphenyl group, a 3-methylphenyl group, a 4-methylphenyl group, a 2,6-dimethylphenyl group, a 3,5-dimethylphenyl group, a 2,4,6-trimethylphenyl group, a 2-isopropylphenyl group, a 3-isopropylphenyl group, a 4-isopropylphenyl group, a 2,6-diisopropylphenyl group, a 3,5-diisopropylphenyl group, a 2,4,6-triisopropylphenyl group, a 2-t-butylphenyl group, a 2-cyclohexylphenyl group, a 2-methoxyphenyl group, a 3-methoxyphenyl group, a 4-methoxyphenyl group, a 2,6-dimethoxyphenyl group, a 3,5-dimethoxyphenyl group, a 2,4,6-trimethoxyphenyl group, a 4-fluorophenyl group, a pentafluorophenyl group, a 4-trifluoromethylphenyl, a 3,5-bis(trifluoromethyl)phenyl group, a 1-naphthyl group, a 2-naphthyl group, a 2-furyl group, a 2-biphenyl group, a 2',6'-dimethoxy-2-biphenyl group, a 2'-methyl-2-biphenyl group, and a 2',4',6'-triisopropyl-2-biphenyl group.

$R^6$ and $R^7$ may be the same or different.

Further, $R^6$ and $R^7$ are each independently preferably an alkyl group, a fluoroalkyl group, a cycloalkyl group optionally having a substituent, an aralkyl group optionally having a substituent, or an aryl group optionally having a substituent, from the viewpoint of ease of synthesis and catalytic activity. The substituent is preferably an alkoxy group having 1 to 6 carbon atoms. More specifically, $R^6$ and $R^7$ are each independently preferably an isopropyl group, a cyclohexyl group, a t-butyl group, a menthyl group, a 9-fluorenyl group, a 2,7-di-t-butyl-9-fluorenyl group, a diphenylmethyl group, a 2-phenyl group, a 2-isopropylphenyl group, or a 2-methoxyphenyl group, and both of $R^6$ and $R^7$ are particularly preferably isopropyl groups, t-butyl groups, menthyl groups, 2,7-di-t-butyl-9-fluorenyl groups, diphenylmethyl groups, 2-methoxyphenyl groups, or 2-isopropylphenyl groups.

$R^8$ and $R^9$ each independently represent a hydrogen atom or a halogen atom.

Preferable specific examples of the halogen atom as represented by $R^8$ and $R^9$ include a fluorine atom, a chlorine atom, and a bromine atom. Among these, a chlorine atom is particularly preferable.

In a certain embodiment, $R^8$ and $R^9$ are each independently a hydrogen atom or a chlorine atom. It is preferable that one of $R^8$ and $R^9$ be a hydrogen atom, and the other be a chlorine atom. It is also preferable that both of $R^8$ and $R^9$ be chlorine atoms.

An electron-donating ligand (L) refers to a compound that has an electron-donating group and can be coordinated to a metal atom M to stabilize the metal complex.

Examples of the electron-donating ligand (L) having a sulfur atom include dimethyl sulfoxide (DMSO). Examples of the electron-donating ligand (L) having a nitrogen atom include trialkylamines having an alkyl group having 1 to 10 carbon atoms, dialkylamines having an alkyl group having 1 to 10 carbon atoms, pyridine, 2,6-dimethylpyridine (another name: 2,6-lutidine), aniline, 2,6-dimethylaniline, 2,6-diisopropylaniline, N,N,N',N'-tetramethylethylenediamine (TMEDA), 4-(N,N-dimethylamino)pyridine (DMAP), acetonitrile, benzonitrile, quinoline, and 2-methylquinoline. Examples of the electron-donating ligand (L) having an oxygen atom include diethyl ether, tetrahydrofuran, and 1,2-dimethoxyethane. From the viewpoint of stability and catalytic activity of the metal complex, dimethyl sulfoxide (DMSO), pyridine, 2,6-dimethylpyridine (another name: 2,6-lutidine), and N,N,N',N'-tetramethylethylenediamine (TMEDA) are preferable, and dimethyl sulfoxide (DMSO) and 2,6-dimethylpyridine (another name: 2,6-lutidine) are more preferable.

q is 0, 1/2, 1, or 2. When q is 1/2, it means that one divalent electron-donating ligand is coordinated to two metal complexes. q is preferably 1/2 or 1, for the metal complex catalyst is stabilized. It should be noted that in a case where q is 0, it means that there is no ligand.

The metal complex represented by General Formula (C1) can be synthesized by a method described in a known literature (for example, J. Am. Chem. Soc. 2007, 129, 8948). That is, a zero-valent or divalent M source is reacted with a ligand in General Formula (C1) to synthesize the metal complex.

Examples of the zero-valent M source include tris(dibenzylideneacetone)dipalladium as a palladium source,

and tetracarbonyl nickel (0): $Ni(CO)_4$ and bis(1,5-cyclooctadiene)nickel as a nickel source.

Examples of the divalent M source include: (1,5-cyclooctadiene)(methyl) palladium chloride, palladium chloride, palladium acetate, bis(acetonitrile)dichloropalladium: $PdCl_2(CH_3CN)_2$, bis(benzonitrile)dichloropalladium: $PdCl_2(PhCN)_2$, (N,N,N',N'-tetramethylethylenediamine)dichloropalladium (II): $PdCl_2$(TMEDA), (N,N,N',N'-tetramethylethylenediamine)dimethylpalladium (II):$PdMe_2$ (TMEDA), bis(acetylacetonato)palladium (II): $Pd(acac)_2$ (acac = acetylacetonato), and palladium (II) trifluoromethanesulfonate: $Pd(OSO_2CF_3)_2$ as the palladium source; and (allyl)nickel chloride, (allyl)nickel bromide, nickel chloride, nickel acetate, bis(acetylacetonato)nickel (II): $Ni(acac)_2$, (1,2-dimethoxyethane)dichloronickel (II): $NiCl_2$(DME), and nickel (II) trifluoromethanesulfonate: $Ni(OSO_2CF_3)_2$ as the nickel source.

After isolated, the metal complex represented by General Formula (C1) can be used, but it is also possible to bring a metal source containing M and a ligand precursor into contact with each other in a reaction system without isolating the complex and to subject this to polymerization as it is (in situ). In particular, in a case where $R^5$ in General Formula (C1) is a hydrogen atom, it is preferable that the metal source containing zero-valent M be reacted with the ligand precursor, and then the complex be directly subjected to polymerization without isolation.

In the case of General Formula (C1), the ligand precursor in this case is, for example, represented by the following Formula (C1-1) or (C1-2):

[Chem. 5]

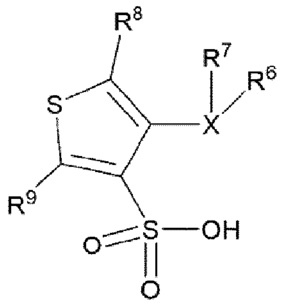

(C1-1)

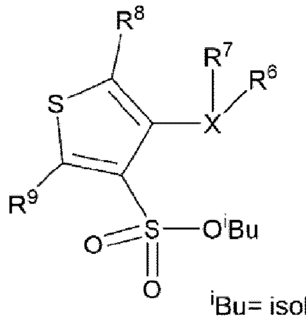

(C1-2)

$^i$Bu= isobutyl

where in the formulas, the symbols have the same meanings as defined above.

The ratio ((C1 ligand)/M) between the M source (M) and the ligand precursor (C1-1) or (C1-2) (C1 ligand) in General Formula (C1) is preferably selected from a range of from 0.5 to 2.0, more preferably from a range of from 1.0 to 1.5.

In a case where the metal complex represented by General Formula (C1) is isolated, it is also possible to use a metal complex stabilized by coordinating the electron-donating ligand (L) in advance. In this case, q is 1/2, 1, or 2. As described above, q being 1/2 means that one divalent electron-donating ligand is coordinated to two metal complexes. q is preferably 1/2 or 1, for the metal complex catalyst is stabilized. It should be noted that in a case where q is 0, it means that there is no ligand.

When supported on a carrier, the metal complex represented by General Formula (C1) can also be used in polymerization. In this case, the carrier is not particularly limited, and examples thereof include inorganic carriers such as silica gel and alumina, and organic carriers such as polystyrene, polyethylene, and polypropylene. Examples of the method for supporting the metal complex include a physical adsorption method in which a carrier is impregnated with a solution of the metal complex and then dried, and a method in which the metal complex and the carrier are chemically bonded to each other for supporting.

[Monomer]

In the method for producing a polymer according to the present invention, ethylene can be not only homopolymerized but also copolymerized with an olefin having a polar group. The olefin having a polar group, which is a second monomer used for copolymerization in the present invention, is represented by General Formula (1):

[Chem. 6]

$$CH_2{=}CH{-}(CH_2)_n{-}R^1 \quad (1)$$

In the formula, $R^1$ represents a substituent selected from the group consisting of a hydroxy group, an alkoxy

group having 1 to 10 carbon atoms, an aryloxy group having 6 to 20 carbon atoms, an acyl group having 2 to 10 carbon atoms, an ester group having 2 to 10 carbon atoms (oxycarbonyl group; R-O-(C=O)-, R represents an organic group), an acyloxy group having 2 to 10 carbon atoms, an amino group, a substituted amino group having 1 to 12 carbon atoms, a substituted amido group having 2 to 12 carbon atoms, a substituted pyridyl group having 5 to 10 carbon atoms, a substituted pyrrolidyl group having 4 to 10 carbon atoms, a substituted piperidyl group having 5 to 10 carbon atoms, a substituted hydrofuryl group having 4 to 10 carbon atoms, a substituted imidazolyl group having 4 to 10 carbon atoms, a mercapto group, an alkylthio group having 1 to 10 carbon atoms, an arylthio group having 6 to 10 carbon atoms, an epoxy group, and a halogen atom. n is an integer selected from 0 to 6.

$R^1$, which is an alkoxy group having 1 to 10 carbon atoms, is preferably an alkoxy group having 1 to 4 carbon atoms, and preferable specific examples thereof include a methoxy group, an ethoxy group, an isopropoxy group, a 1-propoxy group, a 1-butoxy group, and a t-butoxy group. Among these, a methoxy group, an ethoxy group, and an isopropoxy group are more preferable, and a methoxy group is particularly preferable.

$R^1$, which is an aryloxy group having 6 to 20 carbon atoms, is preferably an aryloxy group having 6 to 12 carbon atoms, and preferable specific examples thereof include a phenoxy group, a 4-methylphenoxy group, a 4-methoxyphenoxy group, a 2,6-dimethylphenoxy group, a 3,5-di-t-butylphenoxy group, and a 2,6-di-t-butylphenoxy group. Among these, a phenoxy group, a 3,5-di-t-butylphenoxy group, and a 2,6-dimethylphenoxy group are more preferable, and a phenoxy group and a 3,5-di-t-butylphenoxy group are particularly preferable.

$R^1$, which is an acyl group having 2 to 10 carbon atoms, is preferably an acyl group having 2 to 8 carbon atoms, and preferable specific examples thereof include an acetyl group, a propionyl group, a butyryl group, an isobutyryl group, a valeryl group, an isovaleryl group, a pivaloyl group, and a benzoyl group. Among these, an acetyl group, a pivaloyl group, and a benzoyl group are more preferable, and a benzoyl group is particularly preferable.

In the ester group having 2 to 10 carbon atoms (oxycarbonyl group; R-O-(C=O)-, R is an organic group), the organic group R is preferably an alkyl group optionally having a functional group such as a hydroxy group or an epoxy group, or an aryl group optionally having the functional group. $R^1$ is preferably an ester group having 2 to 8 carbon atoms, and preferable specific examples thereof include a methoxycarbonyl group, an ethoxycarbonyl group, an n-propoxycarbonyl group, an isopropoxycarbonyl group, an n-butoxycarbonyl group, a t-butoxycarbonyl group, a (4-hydroxybutoxy)carbonyl group, a (4-glycidylbutoxy)carbonyl group, and a phenoxycarbonyl group. Among these, a methoxycarbonyl group, an ethoxycarbonyl group, and a (4-hydroxybutoxy)carbonyl group are more preferable, and a methoxycarbonyl group is particularly preferable.

$R^1$, which is an acyloxy group having 2 to 10 carbon atoms, is preferably an acyloxy group having 2 to 8 carbon atoms, and preferable specific examples thereof include an acetyloxy group, a propionyloxy group, a butyryloxy group, an isobutyryloxy group, a valeryloxy group, an isovaleryloxy group, a pivaloyloxy group, and a benzoyloxy group. Among these, an acetyloxy group, a propionyloxy group, and a benzoyloxy group are more preferable, and an acetyloxy group and a propionyloxy group are particularly preferable.

Preferable specific examples of $R^1$, which is a substituted amino group having 1 to 12 carbon atoms, include a monomethylamino group, a dimethylamino group, a monoethylamino group, a diethylamino group, a monoisopropylamino group, a diisopropylamino group, a monophenylamino group, a diphenylamino group, a bis(trimethylsilyl)amino group, and a morpholinyl group. Among these, a dimethylamino group and a diphenylamino group are more preferable.

In the substituted amido group having 1 to 12 carbon atoms (R-(C=O)NH-, R is an organic group), the organic group R is preferably an alkyl group optionally having a functional group such as a hydroxy group or an epoxy group, or an aryl group optionally having the functional group. Preferable specific examples of $R^1$ include an acetamido group, a propionylamino group, a butyrylamino group, an isobutyrylamino group, a valerylamino group, an isovalerylamino group, a pivaloylamino group, and a benzoylamino group. Among these, an acetamido group, a propionylamino group, and a benzoylamino group are more preferable, and an acetamido group is particularly preferable.

Preferable specific examples of $R^1$, which is a substituted pyridyl group having 5 to 10 carbon atoms, include a 2-pyridyl group, a 3-pyridyl group, a 2-(3-methyl)pyridyl group, a 2-(4-methyl)pyridyl group, a 3-(2-methyl)pyridyl group, a 3-(4-methyl)pyridyl group, a 2-(4-chloromethyl)pyridyl group, and a 3-(4-chloromethyl)pyridyl group. Among these, a 2-pyridyl group, a 3-pyridyl group, and a 2-(4-methyl)pyridyl group are more preferable, and a 2-pyridyl group is particularly preferable.

Preferable specific examples of $R^1$, which is a substituted pyrrolidyl group having 4 to 10 carbon atoms, include a 2-pyrrolidyl group, a 3-pyrrolidyl group, a 2-(1-methyl)pyrrolidyl group, a 2-(1-butyl)pyrrolidyl group, a 2-(1-cyclopentenyl)pyrrolidyl group, a 2-(4-methoxycarbonyl)pyrrolidyl group, a 2-(5-methoxycarbonyl)pyrrolidyl group, and a 2-(6-methoxycarbonyl)pyrrolidyl group. Among these, a 2-pyrrolidyl group, a 3-pyrrolidyl group, a 2-(1-methyl)pyrrolidyl group, and a 2-(6-methoxycarbonyl)pyrrolidyl group are more preferable, and a 2-pyrrolidyl group is particularly preferable.

Preferable specific examples of $R^1$, which is a substituted piperidyl group having 5 to 10 carbon atoms, include a 2-piperidyl group, a 3-piperidyl group, a 2-(1,2,3,6-tetrahydro)piperidyl group, a 2-(1-methyl)piperidyl group, a 2-(1-ethyl)piperidyl group, a 2-(4-methyl)piperidyl group, a 2-(5-methyl)piperidyl group, and a 2-(6-methyl)piperidyl group. Among these, a 2-piperidyl group, a 3-piperidyl group, a 2-(1,2,3,6-tetrahydro)piperidyl group, and a 2-(6-methyl)piperidyl

group are more preferable, and a 2-piperidyl group and a 2-(1,2,3,6-tetrahydro)piperidyl group are particularly preferable.

Preferable specific examples of $R^1$, which is a substituted hydrofuryl group having 4 to 10 carbon atoms, include a 2-tetrahydrofuryl group, a 3-tetrahydrofuryl group, a 2-(5-methyl)tetrahydrofuryl group, a 2-(5-isopropyl)tetrahydrofuryl group, a 2-(5-ethyl)tetrahydrofuryl group, a 2-(5-methoxy)tetrahydrofuryl group, a 2-(5-acetyl)tetrahydrofuryl group, and a 2-(4,5-benzo)tetrahydrofuryl group. Among these, a 2-tetrahydrofuryl group, a 3-tetrahydrofuryl group, a 2-(5-methyl)tetrahydrofuryl group, a 2-(5-isopropyl)tetrahydrofuryl group, and a 2-(4,5-benzo)tetrahydrofuryl group are more preferable, and a 2-tetrahydrofuryl group, a 2-(5-methyl)tetrahydrofuryl group, and a 2-(5-isopropyl)tetrahydrofuryl group are particularly preferable.

Preferable specific examples of $R^1$, which is a substituted imidazolyl group having 4 to 10 carbon atoms, include a 2-imidazolyl group, a 2-(1-methyl)imidazolyl group, a 2-(1-benzyl)imidazolyl group, a 2-(1-acetyl)imidazolyl group, a 2-(4,5-benzo)imidazolyl group, and a 2-(1-methyl-4,5-benzo)imidazolyl group. Among these, a 2-imidazolyl group, a 2-(1-methyl)imidazolyl group, and a 2-(4,5-benzo)imidazolyl group are more preferable, and a 2-(1-methyl)imidazolyl group, and a 2-(4,5-benzo)imidazolyl group are particularly preferable.

Preferable specific examples of $R^1$, which is an alkylthio group having 1 to 10 carbon atoms, include a methylthio group, an ethylthio group, a propylthio group, and a t-butylthio group. Preferable specific examples of $R^1$, which is an arylthio group having 6 to 10 carbon atoms, include a phenylthio group. Among these, a methylthio group, a t-butylthio group, and a phenylthio group are more preferable, and a methylthio group and a phenylthio group are particularly preferable.

Preferable specific examples of $R^1$, which is a halogen atom, include a fluorine atom, a chlorine atom, and a bromine atom. Among these, a chlorine atom is more preferable.

Among these preferable groups for $R^1$, an alkoxy group having 1 to 10 carbon atoms, an ester group having 2 to 10 carbon atoms, and an acyloxy group having 2 to 10 carbon atoms are more preferable, and an acyloxy group having 2 to 10 carbon atoms is particularly preferable. Among the acyloxy groups having 2 to 10 carbon atoms, an acyloxy group having 2 to 5 carbon atoms is more preferable.

The value for n in General Formula (1) is preferably 0 or 1, and more preferably 1.

Particularly preferable specific examples of the polar comonomer represented by General Formula (1) include methyl acrylate, ethyl acrylate, allyl acetate, and allyl methyl ether.

In the method for producing a (co)polymer of the present invention, two or more kinds of the olefin having a polar group represented by General Formula (1) to be copolymerized with ethylene may be polymerized in combination.

In the method for producing a (co)polymer of the present invention, another monomer (third monomer) may be used in addition to ethylene and the olefin having a polar group represented by General Formula (1). Examples of the third monomer include $\alpha$-olefins such as propylene, 1-butene, 1-pentene, 1-hexene, 4-methyl-1-pentene, 1-heptene, 1-octene, 1-nonene, 1-decene, and styrene. Among these, propylene, 1-butene, and 1-hexene are preferable. Two or more kinds of these third monomers may be polymerized in combination. However, when $\alpha$-olefin is copolymerized as a third monomer, a ratio of $\alpha$-olefin to the total of $\alpha$-olefin and ethylene contained in the resulting polymer is less than 40 mol%.

[Polymerization Method]

The method for polymerizing ethylene alone or ethylene and the monomer represented by General Formula (1) by using the metal complex of the present invention as a catalyst is not particularly limited and may be a commonly used polymerization method. That is, process methods such as a solution polymerization method, a suspension polymerization method, and a gas phase polymerization method can be used, and the solution polymerization method and the suspension polymerization method are particularly preferable. The polymerization mode may be a batch mode or a continuous mode. The polymerization can be performed in a single stage or in multiple stages.

Two or more kinds of the metal complex catalysts represented by General Formula (C1) may be mixed and used in the polymerization reaction. When the mixture of the metal complex catalysts is used, it is possible to control a molecular weight, molecular weight distribution, and a content of a monomer unit derived from the monomer of General Formula (1) of the polymer and thereby obtain a polymer suitable for a desired application. A molar ratio between the total amount of the metal complex catalysts and the total amount of the monomer is usually in a range of from 1 to 10000000, preferably in a range of from 10 to 1000000, and more preferably in a range of from 100 to 100000 in terms of the ratio of the monomer/the metal complexes.

A polymerization temperature is not particularly limited, but is usually in a range of from -30 to 400°C, preferably from 0 to 200°C, and more preferably from 30 to 180°C.

A polymerization pressure at which an ethylene pressure accounts for most of the internal pressure is in a range of from atmospheric pressure to 100 MPa, preferably in a range of from atmospheric pressure to 20 MPa, and more preferably in a range of from atmospheric pressure to 10 MPa.

A polymerization time can be appropriately adjusted depending on the process mode, polymerization activity

of the catalyst, and the like, and both a short reaction time of several tens of seconds to several minutes and a long reaction time of thousands of hours are possible.

For avoiding a decrease in the activity of the catalyst, an atmosphere in the polymerization system is preferably filled with an inert gas such as nitrogen gas or argon in such a manner that air, oxygen, moisture, and the like other than the monomer are not mixed. In a case of solution polymerization, it is possible to use an inert solvent in addition to the monomer. Examples of the inert solvent include, but are not limited to, aliphatic hydrocarbons such as isobutane, pentane, hexane, heptane, and cyclohexane; aromatic hydrocarbons such as benzene, toluene, and xylene; halogenated aliphatic hydrocarbons such as chloroform, methylene chloride, carbon tetrachloride, dichloroethane, and tetrachloroethane; halogenated aromatic hydrocarbons such as chlorobenzene, dichlorobenzene, and trichlorobenzene; aliphatic esters such as methyl acetate and ethyl acetate; and aromatic esters such as methyl benzoate and ethyl benzoate.

EXAMPLES

Hereinafter, the present invention will be described in detail with reference to Examples and Comparative Examples. However, the present invention is not limited to the following Examples.

[Method for Analyzing Structure of Polymer]

A number average molecular weight and a weight average molecular weight of a (co)polymer were calculated by size exclusion chromatography (solvent: 1,2-dichlorobenzene, temperature: 145°C, detector: RI) calibrated with polystyrene standards for molecular weight, by using a high-temperature GPC apparatus HLC-8121GPC/HT available from Tosoh Corporation equipped with an AT-806MS column (two columns in series) available from Showa Denko K.K.

Using JNM-ECS400 available from JEOL Ltd., the content of the monomer unit derived from the olefin having a polar group represented by General Formula (1) was determined by $^{1}$H-NMR at 120°C with using 1,1,2,2-tetrachloroethane-d2 as a solvent.

[Synthesis of Metal Complex 1]

Metal Complex 1 was synthesized in accordance with the following reaction formula:

[Chem. 7]

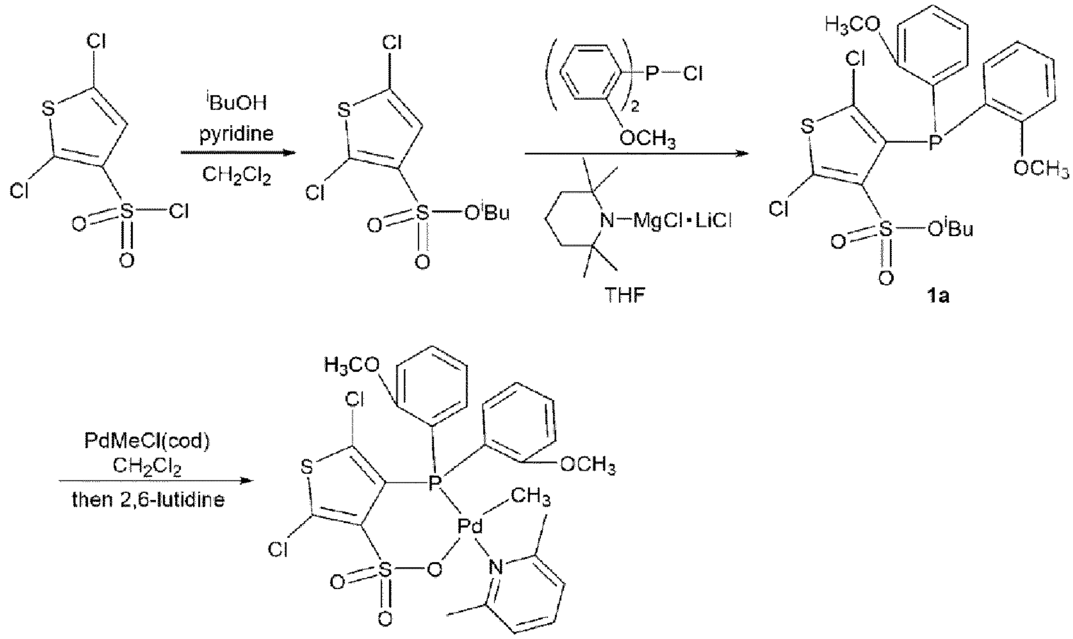


Metal Complex 1

(a) Synthesis of isobutyl 2,5-dichloro-3-thiophenesulfonate

Under a nitrogen gas atmosphere, 2,5-dichloro-3-thienylsulfonylchloride (available from Aldrich, 10.8 g, 43.0 mmol) and dehydrated methylene chloride (150 mL) were put into an eggplant flask and stirred in an ice bath. Anhydrous pyridine (6.93 mL, 86.1 mmol) and isobutanol (4.77 mL, 51.6 mmol) were slowly added dropwise thereto. After stirring for 10 minutes, the ice bath was removed, and the mixture was further stirred at room temperature for 18 hours. After the reaction liquid was quenched by adding 1.0 M hydrochloride (100 mL), liquid separation operation was performed. An organic layer was washed with saturated brine and dried over sodium sulfate, and then the solvent was removed by a rotary evaporator to obtain a yellow oily substance. The residue was purified by flash column chromatography using methylene chloride as a solvent to give isobutyl 2,5-dichloro-3-thiophenesulfonate as a colorless oily substance (7.83 g, 63% yield).

$^1$H-NMR (400 MHz, $CDCl_3$): δ7.14 (s, 1H), 3.94 (d, J = 6.7 Hz, 2H), 2.02 (do, J = 13.4, 6.7 Hz, 1H), 0.96 (d, J = 6.7 Hz, 6H).

(b) Synthesis of isobutyl 2,5-dichloro-4-bis(2-methoxyphenyl)phosphino-3-thiophenesulfonate 1a

Under a nitrogen gas atmosphere, isobutyl 2,5-dichloro-3-thiophenesulfonate (7.83 g, 27.1 mmol), bis(2-methoxyphenyl)phosphine chloride (8.36 g, 29.8 mmol), and dehydrated tetrahydrofuran (20 mL) were put into an eggplant flask and stirred in an ice bath for 20 minutes. 2,2,6,6-tetramethylpiperidyl magnesium chloride-lithium chloride (0.62 M tetrahydrofuran solution, 48.0 mL, 29.8 mmol) was slowly added dropwise, and the mixture was further stirred for 1.5 hours. After concentration under reduced pressure, 1.0 M hydrochloride (50 mL) and methylene chloride (100 mL) were added to the residue to dissolve, and an organic layer and an aqueous layer were separated using a separating funnel. The organic layer was washed with saturated brine and dried over sodium sulfate, and then the solvent was removed by a rotary evaporator to obtain a yellow solid. The residue was purified by flash column chromatography using methylene chloride as a solvent to give isobutyl 2,5-dichloro-4-bis(2-methoxyphenyl)phosphino-3-thiophenesulfonate 1a as a colorless solid (11.59 g, 80% yield). $^1$H-NMR (400 MHz, $CD_2Cl_2$): δ7.39-7.34 (m, 2H), 6.97-6.84 (m, 6H), 3.89 (d, J = 6.7 Hz, 2H), 3.76 (s, 6H), 1.83 (do, J = 13.5, 6.7 Hz, 1H), 0.86 (d, J = 6.7 Hz, 6H).

$^{31}$P-NMR (162 MHz, $CD_2Cl_2$): δ-31.70.

(c) Synthesis of Metal Complex 1

Under a nitrogen gas atmosphere, isobutyl 2,5-dichloro-4-bis(2-methoxyphenyl)phosphino-3-thiophenesulfonate 1a (105.4 mg, 0.20 mmol), PdMeCl(cod) (cod = 1,5-cyclooctadiene, 52.4 mg, 0.20 mmol), and dehydrated methylene chloride (2 mL) were put into an eggplant flask and stirred at room temperature for 1 hour. To the solution, a methylene chloride solution (2 mL) of 2,6-lutidine (68.7 μL, 0.59 mmol) was added, and the mixture was further stirred at room temperature for 5.5 hours. After the stirring was stopped, anhydrous hexane (8 mL) was slowly added dropwise to the reaction solution, and the mixture was allowed to stand at room temperature for 22 hours. The precipitated colorless crystal was collected by filtration and dried under reduced pressure to obtain Metal Complex 1 (130.5 mg, 94% yield).

$^1$H-NMR (400 MHz, $CD_2Cl_2$): δ7.63 (t, J = 7.7 Hz, 1H), 7.59-7.53 (m, 2H), 7.45 (ddd, J = 13.6, 7.7, 1.7 Hz, 2H), 7.18 (d, J = 7.7 Hz, 2H), 7.06-7.00 (m, 4H), 3.85 (s, 6H), 3.10 (s, 6H), -0.01 (d, J = 3.6 Hz, 3H).

$^{31}$P-NMR (162 MHz, $CD_2Cl_2$): δ8.08.

[Synthesis of Metal Complex 2]

Metal Complex 2 was synthesized in accordance with the following reaction formula:

[Chem. 8]

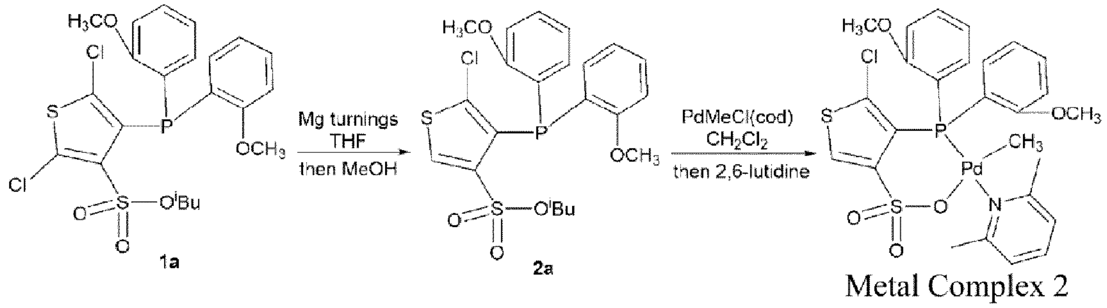


1a 2a Metal Complex 2

(d) Synthesis of isobutyl 5-chloro-4-bis(2-methoxyphenyl)phosphino-3-thiophenesulfonate 2a Under a nitrogen gas atmosphere, isobutyl 2,5-dichloro-4-bis (2-methoxyphenyl)phosphino-3-thiophenesulfonate 1a (1.00 g, 1.87 mmol) produced by the method described in the section of Synthesis of Metal Complex 1, magnesium turnings (50.1 mg, 2.06 mmol), and anhydrous tetrahydrofuran (5 mL) were put into an eggplant flask and stirred at room temperature for 25 hours. Anhydrous methanol (2 mL) was added, and after stirring for 5 minutes, the solvent was concentrated under reduced pressure. The residue was dissolved in anhydrous toluene (20 mL), filtration was performed through celite (dried diatomaceous earth), and then, the solvent was concentrated under reduced pressure to give a light yellow solid. Methylene chloride (20 mL), saturated ammonium chloride aqueous solution (5 mL), and deionized water (10 mL) were added to the residue and organic and aqueous layers were separated using a separating funnel. After the aqueous layer was extracted four times with methylene chloride (10 mL), the mixed organic layer was dried over sodium sulfate, and the solvent was concentrated by a rotary evaporator. The residue was dried under reduced pressure to give isobutyl 5-chloro-4-bis(2-methoxyphenyl)phosphino-3-thiophenesulfonate 2a as a colorless solid (0.87 g, 93% yield).

$^1H$-NMR (400 MHz, $C_6D_6$): $\delta$7.60 (d, J = 3.3 Hz, 1H), 7.19 (ddd, J = 7.6, 4.0, 1.7 Hz, 2H), 7.13-7.08 (m, 2H), 6.83-6.76 (m, 2H), 6.51-6.47 (m, 2H), 3.97 (d, J = 6.6 Hz, 2H), 3.23 (s, 6H), 1.62 (do, J = 13.5, 6.8 Hz, 1H), 0.62 (d, J = 6.7 Hz, 6H).

$^{31}P$-NMR (162 MHz, $C_6D_6$): $\delta$-38.60.

(e) Synthesis of Metal Complex 2

Under a nitrogen gas atmosphere, isobutyl 5-chloro-4-bis(2-methoxyphenyl)phosphino-3-thiophenesulfonate 2a (282.3 mg, 0.57 mmol), PdMeCl(cod) (cod = 1,5-cyclooctadiene, 150.0 mg, 0.57 mmol), and dehydrated methylene chloride (2 mL) were put into an eggplant flask and stirred at room temperature for 10 minutes. To the solution, 2,6-lutidine (197.0 $\mu$L, 1.70 mmol) was added and further stirred at room temperature for 14 hours. After methylene chloride (12 mL) was added to the reaction liquid and the mixture was filtered through a glass filter, hexane (30 mL) was slowly added to the filtrate. The mixture was then allowed to stand for 24 hours. The precipitated crystal was collected by filtration, washed with hexane (2 mL), and then dried under reduced pressure to obtain Metal Complex 2 (372.1 mg, 88% yield).

$^1H$-NMR (400 MHz, $CD_2Cl_2$): $\delta$7.71 (ddd, J = 14.6, 7.6, 1.7 Hz, 2H), 7.67-7.62 (m, 2H), 7.57-7.53 (m, 2H), 7.19 (d, J = 7.7 Hz, 2H), 7.07-7.02 (m, 2H), 7.02-6.96 (m, 2H), 3.81 (s, 6H), 3.14 (s, 6H), -0.06 (d, J = 4.1 Hz, 3H).

$^{31}P$-NMR (162 MHz, $CD_2Cl_2$): $\delta$8.01.

[Synthesis of Metal Complex 3]

Metal Complex 3 was synthesized in accordance with the following reaction formula:

[Chem. 9]

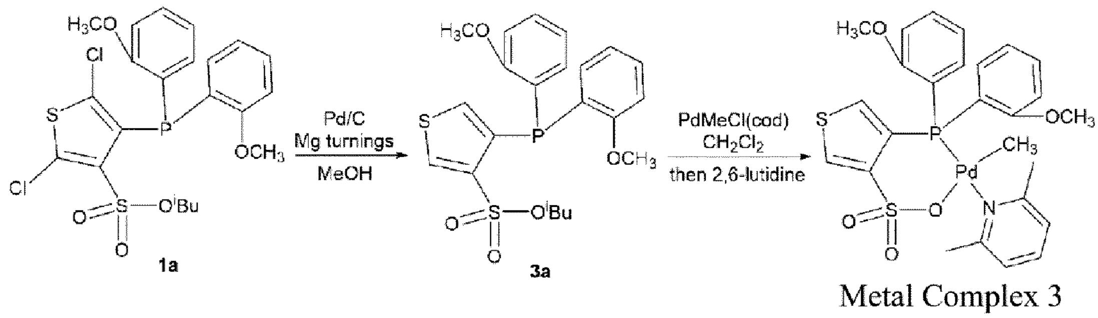


1a 3a Metal Complex 3

(f) Synthesis of isobutyl 4-bis(2-methoxyphenyl)phosphino-3-thiophenesulfonate 3a

Under a nitrogen gas atmosphere, isobutyl 2,5-dichloro-4-bis(2-methoxyphenyl)phosphino-3-thiophenesulfonate 1a (1.00 g, 1.87 mmol) produced by the method described in the section of Synthesis of Metal Complex 1, magnesium turnings (91.1 mg, 3.75 mmol), and anhydrous tetrahydrofuran (15 mL) were put into an eggplant flask, and stirring was started at room temperature. Palladium on carbon (10 mass%, 39.9 mg) was added followed by anhydrous methanol (15 mL), and the mixture was stirred overnight. After completion of the reaction was confirmed by $^{31}P$-NMR spectroscopy, the solvent was removed under reduced pressure. Saturated ammonium chloride aqueous solution (20 mL) and deionized water (10 mL) were added to the residue, and organic and aqueous layers were separated. The aqueous layer was extracted four times with methylene chloride (10 mL), the mixed organic layer was dried over sodium

sulfate, and the solvent was removed under reduced pressure. Toluene (20 mL) was added to the residue, and the mixture was allowed to pass through silica gel (3 cm), followed by concentration and drying under reduced pressure to obtain isobutyl 4-bis(2-methoxyphenyl)phosphino-3-thiophenesulfonate 3a as a colorless solid (0.59 g, 64% yield). $^1$H-NMR (400 MHz, $C_6D_6$): δ7.90-7.87 (m, 1H), 7.13-7.07 (m, 2H), 6.99-6.91 (m, 2H), 6.75 (t, J = 7.4 Hz, 2H), 6.58 (d, J = 3.4 Hz, 1H), 6.46 (dd, J = 8.2, 5.0 Hz, 2H), 3.96 (d, J = 6.5 Hz, 2H), 3.15 (s, 6H), 1.69 (do, J = 13.3, 6.7 Hz, 1H), 0.70 (d, J = 6.7 Hz, 6H).

$^{31}$P-NMR (162 MHz, $C_6D_6$): δ-40.75.

(g) Synthesis of Metal Complex 3

Under a nitrogen gas atmosphere, isobutyl 4-bis(2-methoxyphenyl)phosphino-3-thiophenesulfonate 3a (150.0 mg, 0.31 mmol), PdMeCl(cod) (cod = 1,5-cyclooctadiene, 81.2 mg, 0.31 mmol), and dehydrated methylene chloride (4 mL) were put into an eggplant flask and stirred at room temperature for 40 minutes. To the solution, 2,6-lutidine (107.0 μL, 0.91 mmol) was added and further stirred at room temperature for 36 hours. After the reaction liquid was filtered with a glass filter, hexane (8 mL) was slowly added to the filtrate, and the mixture was allowed to stand for 21 hours. The precipitated crystal was collected by filtration, washed with hexane (2 mL), and then dried under reduced pressure to obtain Metal Complex 3 (150.1 mg, 76% yield).

$^1$H-NMR (400 MHz, $CD_2Cl_2$): δ7.82-7.80 (m, 1H), 7.77-7.62 (m, 3H), 7.61-7.57 (m, 2H), 7.27 (dd, J = 6.7, 3.3 Hz, 1H), 7.22 (d, J = 7.7 Hz, 2H), 7.12-7.07 (m, 2H), 7.06-7.02 (m, 2H), 3.77 (s, 6H), 3.17 (s, 6H), 0.10 (d, J = 3.9 Hz, 3H).

$^{31}$P-NMR (162 MHz, $CD_2Cl_2$): δ8.16.

[Synthesis of Metal Complex 4]

Metal Complex 4 was synthesized in accordance with the following reaction formula:

[Chem. 10]

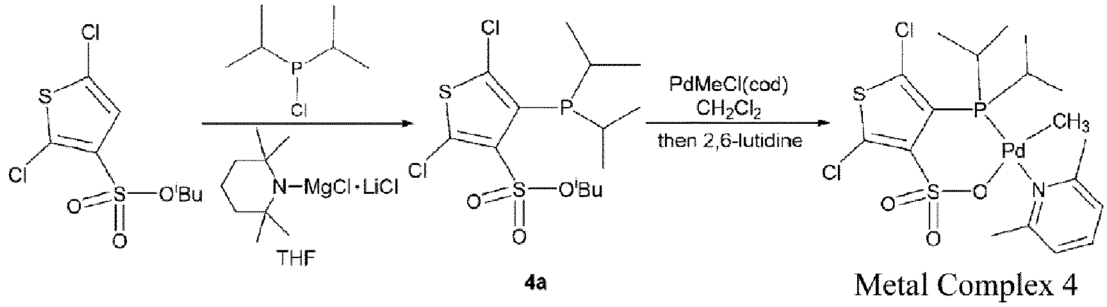


4a

Metal Complex 4

(h) Synthesis of isobutyl 2,5-dichloro-4-diisopropylphosphino-3-thiophenesulfonate 4a

Under a nitrogen gas atmosphere, isobutyl 2,5-dichloro-3-thiophenesulfonate (0.86 g, 3.0 mmol) and dehydrated THF (3 mL) were added to a 50 mL Schlenk tube and cooled in an ice bath. To the solution, a THF solution of 2,2,6,6-tetramethylpiperidinylmagnesium chloride-lithium chloride complex (concentration 1.0 M, 3.5 mL, 3.5 mmol) was added and the mixture was stirred for 15 minutes. Diisopropylphosphine chloride (0.45 g, 3.0 mmol) was further added thereto over 5 minutes, and the mixture was stirred for 2.5 hours. The solvent was removed, dehydrated methylene chloride and nitrogen-bubbled 1M hydrochloride were added, and the mixture was vigorously stirred. The organic layer was dehydrated over sodium sulfate, and then the solvent was partially removed to precipitate a colorless solid. After the precipitated solid was removed by filtration, concentration and drying under vacuum were performed to obtain isobutyl 2,5-dichloro-4-diisopropylphosphino-3-thiophenesulfonate 4a as an orange-colored oil (1.5 g, 95% yield).

$^1$H-NMR (400 MHz, $CDCl_3$): δ3.96 (d, J = 6.4 Hz, 2H), 2.73 (oct, J = 7.0 Hz, 2H), 2.05 (sept, J = 6.4 Hz, 1H), 1.20 (dd, J = 6.8, 17.2 Hz, 6H), 0.97 (d, J = 6.8 Hz, 6H), 0.92 (dd, J = 7.2, 12.8 Hz, 6H).

$^{31}$P-NMR (162 MHz, $CDCl_3$): δ10.4 ppm.

(i) Synthesis of Metal Complex 4

Under an argon gas atmosphere, isobutyl 2,5-dichloro-4-diisopropylphosphino-3-thiophenesulfonate 4a (0.51 g, 1.0 mmol), PdMeCl(cod) (0.26 g, 1 mmol), and dehydrated methylene chloride (10 mL) were added to a 50 mL Schlenk tube, and the mixture was stirred at room temperature for 1 hour. To the solution, 2,6-lutidine (0.32 g, 3 mmol) was

added, and the mixture was further stirred at room temperature for 6 hours. After 9 mL of hexane was added to the reaction solution, the mixture was allowed to stand for 15 hours. The precipitated white solid was collected by filtration and dried under reduced pressure to obtain Metal Complex 4 (0.4 g, 73% yield).

$^{1}$H-NMR (400 MHz, $CDCl_3$): δ7.56 (t, J = 7.6 Hz, 1H), 7.11 (d, J = 8.0 Hz, 2H), 3.17-3.07 (m, 2H), 3.13 (s, 6H), 1.40 (dd, J = 7.2, 17.6 Hz, 6H), 1.34 (dd, J = 4.4, 15.6 Hz, 6H), 0.36 (d, J = 2.4 Hz, 3H).

$^{31}$P-NMR (162 MHz, $CDCl_3$): δ45.0 ppm.

[Synthesis of Metal Complex 5]

Metal Complex 5 was synthesized in accordance with the following reaction formula:

[Chem. 11]

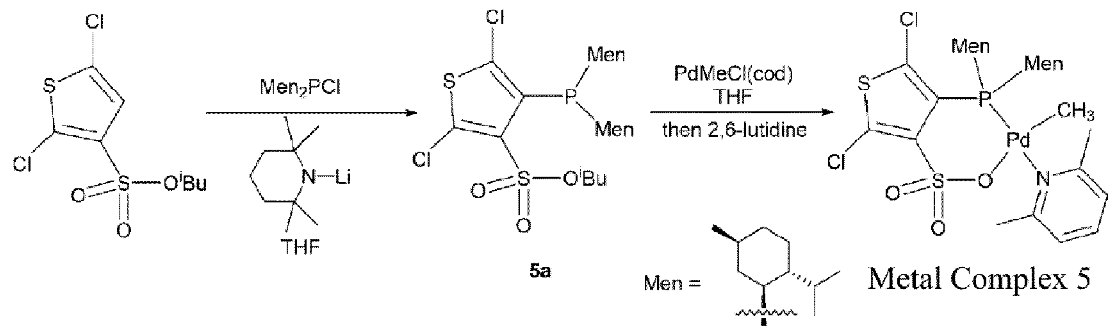


(j) Synthesis of isobutyl 2,5-dichloro-4-dimenthylphosphino-3-thiophenesulfonate 5a

Under a nitrogen gas atmosphere, isobutyl 2,5-dichloro-3-thiophenesulfonate (0.86 g, 3.0 mmol), dimenthylchlorophosphine (3.0 mmol), and dehydrated THF (12 mL) were added to a 100 mL Schlenk tube, and the mixture was stirred at -70°C. To the solution, a THF solution of lithium tetramethylpiperidide (3.0 mmol) was added dropwise, and the mixture was stirred for 2 hours while raising the temperature to 0°C. The solvent of the reaction liquid was removed at room temperature to obtain a light brown oil. The residue was purified by silica gel column chromatography using hexane as an eluent to obtain isobutyl 2,5-dichloro-4-dimenthylphosphino-3-thiophenesulfonate 5a as a clear oil (1.08 g, 47% yield).

$^{31}$P-NMR (162 MHz, $CDCl_3$): δ-3.2 ppm.

(k) Synthesis of Metal Complex 5

Under an argon gas atmosphere, isobutyl 2,5-dichloro-4-dimenthylphosphino-3-thiophenesulfonate 5a (0.11 g, 0.19 mmol), PdMeCl(cod) (0.048 g, 0.18 mmol), 2,6-lutidine (0.081 g, 0.76 mmol), and dehydrated THF (7 mL) were added to a 10 mL Schlenk tube, and stirred at 60°C for 19 hours. The solvent was removed and reprecipitation was performed with THF/hexane to obtain Metal Complex 5 as a white solid (0.055 g, 38% yield).

$^{1}$H-NMR (400 MHz, $CDCl_3$): δ7.56 (t, J = 3.9 Hz, 1H), 7.12-7.06 (m, 2H), 3.17 (s, 3H), 3.12 (s, 3H), 2.99-2.86 (m, 2H), 2.86-2.78 (m, 1H), 2.26 (quintet, J = 14.8 Hz, 1H), 2.10-2.05 (m, 1H), 2.03-1.97 (m, 1H), 1.92-1.68 (m, 6H), 1.34-1.24 (m, 5H), 0.96-0.92 (m, 9H), 0.89-0.84 (m, 9H), 0.43 (d, J = 2.0 HZ, 3H), 0.31 (d, J = 6.4 Hz, 3H).

$^{31}$ P-NMR (162 MHz, $CDCl_3$): δ35.0 ppm.

[Synthesis of Metal Complex 6]

Metal Complex 6 was synthesized in accordance with the following reaction formula:

[Chem. 12]

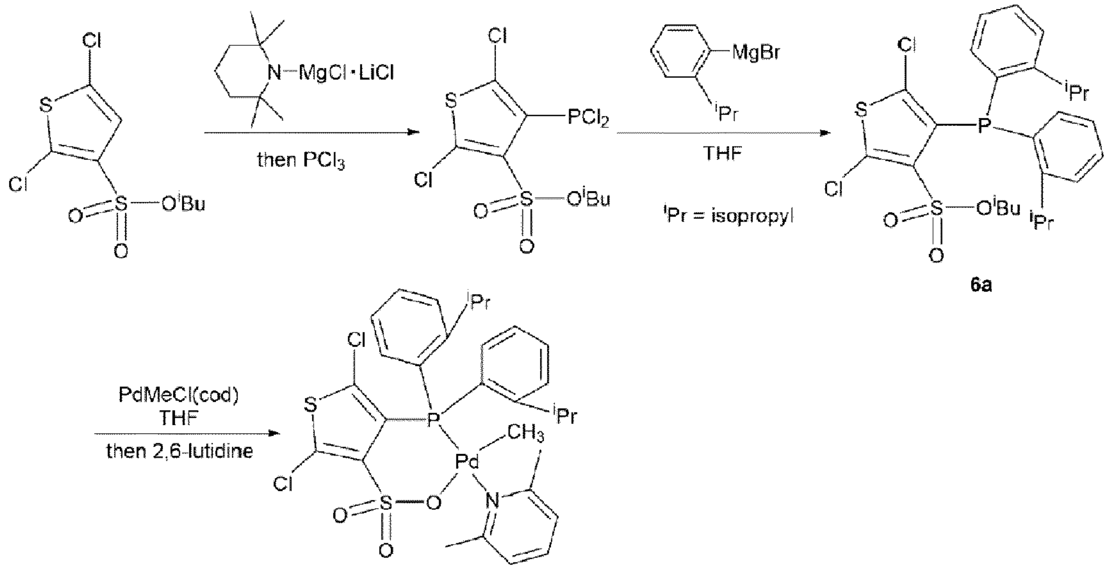


6a

Metal Complex 6

(l) Synthesis of isobutyl 2,5-dichloro-4-(dichlorophosphino)-3-thiophenesulfonate

Under a nitrogen gas atmosphere, isobutyl 2,5-dichloro-3-thiophenesulfonate (2.0 g, 7.0 mmol) and dehydrated THF (5 mL) were added to a 50 mL Schlenk tube, and the mixture was stirred at -30°C. To the solution, a THF solution of 2,2,6,6-tetramethylpiperidinylmagnesium chloride-lithium chloride complex (0.75 M, 9.3 mL, 7.0 mmol) was added, and the mixture was stirred for 2.5 hours while raising the temperature to room temperature. Under a nitrogen gas atmosphere, the reaction liquid was added dropwise to a 200 mL three-necked flask, in which phosphorus trichloride (1.10 g, 8.0 mmol) and dehydrated THF (20 mL) were added, while stirring at -35°C, and then the mixture was stirred at -40 to -20°C for 1.5 hours. The solvent of the solution was removed while cooling to -20°C. The resulting reddish-brown residue was dissolved in dehydrated methylene chloride (10 mL) and filtered through celite, and then the solvent of the filtrate was removed to obtain isobutyl 2,5-dichloro-4-(dichlorophosphino)-3-thiophenesulfonate.

$^1$H-NMR (400 MHz, $CDCl_3$): δ3.96 (d, J = 6.4 Hz, 2H), 2.01 (sept, J = 6.7 Hz, 1H), 0.94 (d, J = 6.8 Hz, 6H).

$^{31}$P-NMR (162 MHz, $CDCl_3$): δ138.2 ppm.

(m) Synthesis of isobutyl 2,5-dichloro-4-(bis(2-isopropylphenyl)phosphino)-3-thiophenesulfonate 6a

Under a nitrogen gas atmosphere, isobutyl 2,5-dichloro-4-(dichlorophosphino)-3-thiophenesulfonate (1.0 mmol) and dehydrated THF (5 mL) were added to a 50 mL Schlenk tube, and the mixture was stirred at -65°C. To the solution, a THF solution of 2-isopropylphenylmagnesium bromide (0.43 M, 4.9 mL) was added dropwise over 30 minutes, and the mixture was stirred for 2 hours while raising the temperature to room temperature. After the solution was quenched by adding ethanol, the solvent was removed to obtain a light brown oil. The residue was purified by silica gel column chromatography using hexane → hexane/THF (11:1) as an eluent to obtain isobutyl 2,5-dichloro-4-(bis(2-isopropylphenyl)phosphino)-3-thiophenesulfonate 6a as a clear oil (0.18 g, 28% yield).

$^1$H-NMR (400 MHz, $CDCl_3$): δ7.33 (br, 4H), 7.09 (br, 4H), 3.61 (br, 2H), 3.41 (sept, J = 6.8 Hz, 2H), 1.51 (sept, J = 6.8 Hz, 1H), 1.37-0.98 (br, 12H), 0.75 (br, 6H).

$^{31}$P-NMR (162 MHz, $CDCl_3$): δ-26.7 ppm.

(n) Synthesis of Metal Complex 6

Under an argon gas atmosphere, isobutyl 2,5-dichloro-4-(bis(2-isopropylphenyl)phosphino)-3-thiophenesulfonate 6a (0.11 g, 0.17 mmol), PdMeCl(cod) (0.045 g, 0.17 mmol), 2,6-lutidine (0.055 g, 0.51 mmol), and dehydrated THF (7 mL) were added to a 30 mL Schlenk tube, and the mixture was stirred at 60°C for 58 hours. After cooling to room temperature, hexane was added to the reaction solution. The precipitated white solid was collected by filtration and dried under reduced pressure to obtain Metal Complex 6 (0.081 g, 58% yield).

$^1$H-NMR (400 MHz, $CDCl_3$): δ7.56 (t, J = 3.8 Hz, 1H), 7.51 (t, J = 1.7 Hz, 4H), 7.36 (dd, J = 6.4, 4.0 Hz, 2H),

7.20-7.15 (m, 2H), 7.09 (d, J = 4.0 Hz, 2H), 3.87 (br, 2H), 3.06 (s, 6H), 1.34 (d, J = 3.2 Hz, 6H), 1.12 (d, J = 3.6 Hz, 6H), 0.39 (d, J = 1.6 Hz, 3H).

$^{31}$P-NMR (162 MHz, $CDCl_3$): δ13.6 ppm.

[Synthesis of Metal Complex 7]

Metal Complex 7 was synthesized in accordance with the following reaction formula:

[Chem. 13]

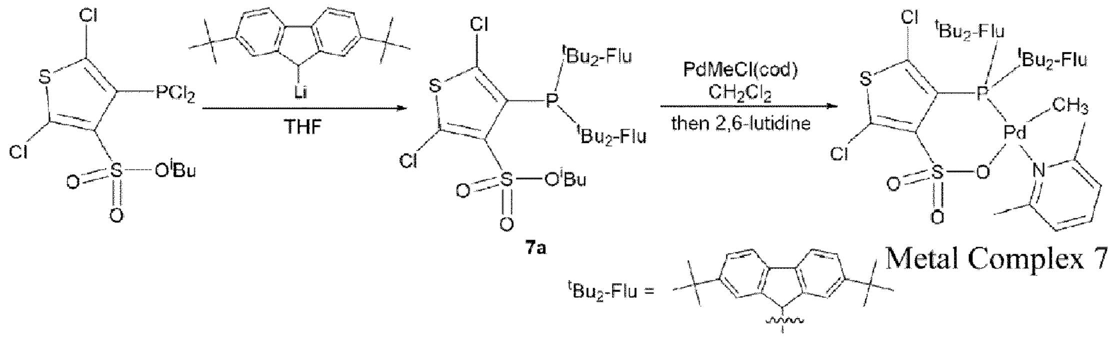


7a

Metal Complex 7

(o) Synthesis of isobutyl 2,5-dichloro-4-(bis(2,7-di-t-butyl-9-fluorenyl)phosphino)-3-thiophenesulfonate 7a

Under a nitrogen gas atmosphere, 2,7-di-t-butylfluorene (1.39 g, 5.0 mmol) and dehydrated THF (20 mL) were added to a 50 mL Schlenk tube, and the mixture was stirred while being cooled in an ice bath. To the solution, a hexane solution of n-butyllithium (1.6 M, 3.2 mL, 5.1 mmol) was slowly added, and the mixture was stirred for 3 hours while raising the temperature to room temperature (the present solution is referred to as a solution A). Under a nitrogen gas atmosphere, a THF solution of isobutyl 2,5-dichloro-4-(dichlorophosphino)-3-thiophenesulfonate (0.26 M, 6.8 mL, 1.8 mmol) and dehydrated THF (10 mL) were added to a 100 mL Schlenk tube, and the mixture was stirred at -75°C. After the solution A (19 mL) was slowly added to the solution, the mixture was stirred at -75°C for 1 hour and was further stirred for 2 hours while raising the temperature to room temperature. After the solution was quenched by adding ethanol, the solvent was removed to obtain a light brown oil. The residue was purified by silica gel column chromatography using THF/hexane (7:3) → THF as an eluent to obtain isobutyl 2,5-dichloro-4-(bis(2,7-di-tert-butyl-9-fluorenyl)phosphino)-3-thiophenesulfonate 7a as a brown oil (0.6 g, 25% yield).

$^{31}$P-NMR (162 MHz, $CDCl_3$): δ16.1 ppm.

(p) Synthesis of Metal Complex 7

Under an argon gas atmosphere, isobutyl 2,5-dichloro-4-(bis(2,7-di-t-butyl-9-fluorenyl)phosphino)-3-thiophenesulfonate 7a (0.25 g, 0.20 mmol), PdMeCl(cod) (0.053 g, 0.20 mmol), 2,6-lutidine (0.12 mL, 1.0 mmol), and dehydrated methylene chloride (10 mL) were added to a 30 mL Schlenk tube, and the mixture was stirred at room temperature for 2 days. The reaction solution was filtered through celite, and the resulting filtrate was concentrated. For the residue, recrystallization was performed from methylene chloride and diethyl ether to obtain Metal Complex 7 as a white solid (0.10 g, 50% yield).

$^{1}$H-NMR (400 MHz, $CDCl_3$): δ8.39 (s, 1H), 8.33 (s, 1H), 8.23 (s, 1H), 7.87 (d, J = 8 Hz, 1H), 7.78 (d, J = 7.6 Hz, 1H), 7.74 (d, J = 8 Hz, 1H), 7.65 (d, J = 8 Hz, 1H), 7.57 (d, J = 8.4 Hz, 1H), 7.54 (d, J = 8.4 Hz, 1H), 7.44-7.38 (m, 3H), 6.98-6.92 (m, 2H), 6.85 (d, J = 8 Hz, 1H), 6.11 (d, J = 18 Hz, 1H), 5.47 (d, J = 4.8 Hz, 1H), 3.08 (s, 3H), 2.15 (s, 3H), 1.36 (s, 9H), 1.34 (s, 9H), 1.26 (s, 9H), 1.10 (s, 9H), 0.04 (d, J = 2.8 Hz, 3H).

$^{31}$P-NMR (162 MHz, $CDCl_3$): δ22.3 ppm.

[Synthesis of Metal Complex 8]

Metal Complex 8 was synthesized in accordance with the following reaction formula:

[Chem. 14]

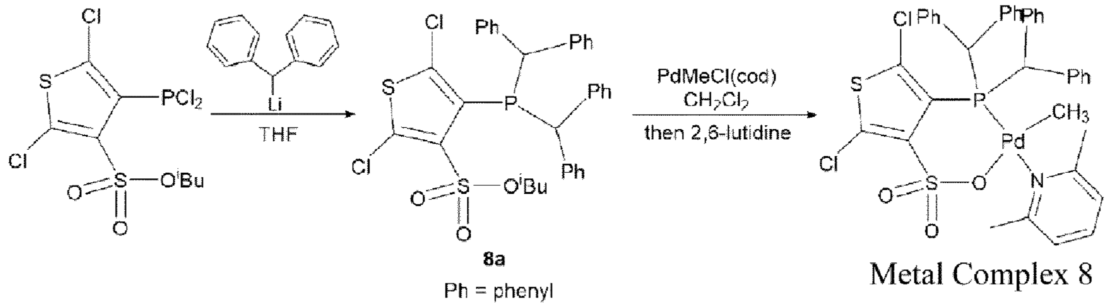


(q) Synthesis of isobutyl 2,5-dichloro-4-(bis(diphenylmethyl)phosphino)-3-thiophenesulfonate 8a

Under a nitrogen gas atmosphere, diphenylmethane (2.5 mL, 15 mmol) and dehydrated THF (25 mL) were added to a 100 mL Schlenk tube, and the mixture was stirred at -70°C. After a hexane solution of n-butyllithium (1.5 M, 10 mL, 15.0 mmol) was added dropwise to the solution at -70°C, the mixture was stirred for 2 hours while raising the temperature to room temperature (the present solution is referred to as a solution B). Under a nitrogen gas atmosphere, a THF solution of isobutyl 2,5-dichloro-4-(dichlorophosphino)-3-thiophenesulfonate (0.14 M, 10.7 mL, 1.5 mmol) and dehydrated THF (6 mL) were added to a 300 mL three-necked flask, and the mixture was stirred at -70°C. To the solution, the solution B (11.3 mL) was slowly added, and the mixture was stirred for 2 hours while raising the temperature to room temperature. After the solution was quenched by adding isobutyl alcohol, the solvent was removed. Methylene chloride and hexane were added to the residue, followed by filtration, and the filtrate was concentrated. The residue was purified by silica gel column chromatography using hexane/THF (10:1) → THF as an eluent to obtain isobutyl 2,5-dichloro-4-(bis(diphenylmethyl)phosphino)-3-thiophenesulfonate 8a as an orange-colored solid (0.14 g, 20% yield).
$^{31}$P-NMR (162 MHz, $CDCl_3$): δ0.0 ppm.

(r) Synthesis of Metal Complex 8

Under an argon gas atmosphere, isobutyl 2,5-dichloro-4-(bis(diphenylmethyl)phosphino)-3-thiophenesulfonate 8a (0.7 g, 0.32 mmol) and PdMeCl(cod) (0.17 g, 0.64 mmol), 2,6-lutidine (0.23 mL, 1.9 mmol), and dehydrated methylene chloride (11 mL) were added to a 50 mL Schlenk tube, and the mixture was stirred at room temperature for 3 days. After the reaction solution was filtered through celite, the filtrate was concentrated. The residue was purified by silica gel column chromatography using hexane → ethyl acetate as an eluent to obtain Metal Complex 8.
$^{1}$H-NMR (400 MHz, $CDCl_3$): δ7.75-6.96 (m, 23H), 4.86 (d, J = 12.0 Hz, 2H), 2.82 (s, 6H), - 0.81 (d, J = 2.4 Hz, 3H).
$^{31}$P-NMR (162 MHz, $CDCl_3$): δ36.0 ppm.

[Synthesis of Metal Complex 9]

Metal Complex 9 was synthesized in accordance with the following reaction formula:

[Chem. 15]

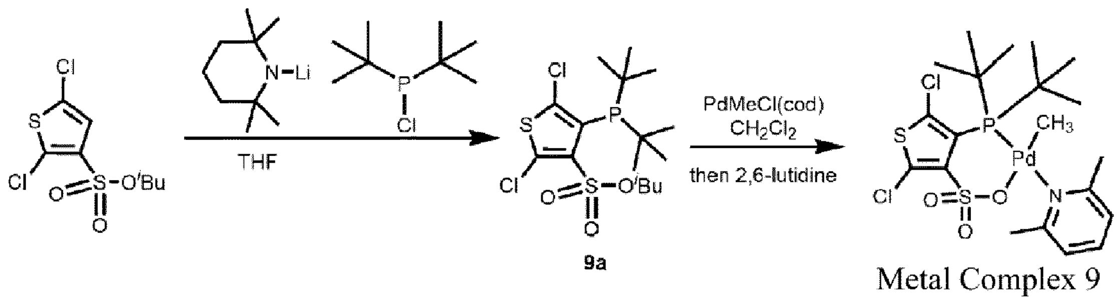


(s) Synthesis of isobutyl 2,5-dichloro-4-di-t-butylphosphino-3-thiophenesulfonate 9a

Under a nitrogen gas atmosphere, isobutyl 2,5-dichloro-3-thiophenesulfonate (2.0 g, 7.0 mmol), di-t-butylchlorophosphine (1.3 mL, 7.0 mmol), and dehydrated THF (30 mL) were added to a 100 mL Schlenk tube, and the mixture was stirred while cooling to -78°C. To the solution, a THF solution of lithium tetramethylpiperidide (concentration 0.35 M) (20 mL, 7.0 mmol) was added dropwise, and the mixture was stirred overnight while gradually raising the temperature to room temperature. Thereafter, the solvent was removed with a vacuum pump, dehydrated methylene chloride and a degassed aqueous ammonium chloride solution were added thereto, and the mixture was vigorously stirred. After the mixture was allowed to stand, the methylene chloride solution layer was extracted and dried over sodium sulfate, and then the solvent was removed to obtain isobutyl 2,5-dichloro-4-di-t-butylphosphino-3-thiophenesulfonate 9a (2.1 g, 71% yield).

$^1$H-NMR (400 MHz, $CDCl_3$): δ3.92 (d, J = 6.4 Hz, 2H), 2.00 (sept, J = 6.4 Hz, 1H), 1.25 (d, J = 12.4 Hz, 18H), 0.93 (d, J = 6.4 Hz, 6H).

$^{31}$P-NMR (162 MHz, $CDCl_3$): δ21.5 ppm.

(t) Synthesis of Metal Complex 9

Under an argon gas atmosphere, isobutyl 2,5-dichloro-4-di-t-butylphosphino-3-thiophenesulfonate 9a (0.29 g, 0.60 mmol), PdMeCl(cod) (0.16 g, 0.60 mmol), 2,6-lutidine (0.21 mL, 1.8 mmol), and dehydrated methylene chloride (20 mL) were added to a 50 mL Schlenk tube, and the mixture was stirred at room temperature for 2 days. After filtration was performed through a syringe filter and the solvent was removed, recrystallization was performed from methylene chloride (3 mL) and hexane (5 mL) to obtain Metal Complex 9 (0.16 g, 41% yield). $^1$H-NMR (400 MHz, $CDCl_3$): δ7.58 (t, J = 7.6 Hz, 1H), 7.13 (d, J = 7.8 Hz, 2H), 3.14 (s, 6H), 1.54 (d, J = 15.1 Hz, 18H), 0.55 (d, J = 1.8 Hz, 3H).

$^{31}$P-NMR (162 MHz, $CDCl_3$): δ52.5 ppm.

[Synthesis of Comparative Metal Complexes 1 to 2]

(u) Synthesis of Comparative Metal Complex 1

In accordance with the method described in JP 2011-068881 A, Comparative Metal Complex 1 represented by the following formula:

[Chem. 16]

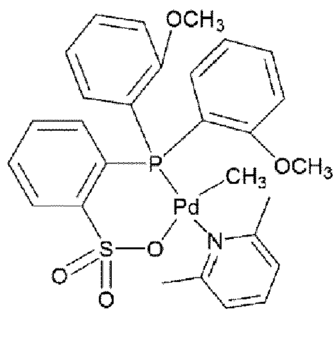

was synthesized.

(v) Synthesis of Comparative Metal Complex 2

In accordance with the method described in WO 2019/093364, Comparative Metal Complex 2 represented by the following formula:

[Chem. 17]

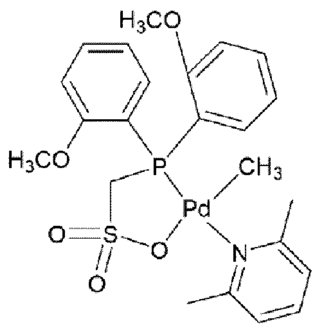

was synthesized.

[Synthesis of Polymer]

Olefin (co)polymerization was performed using Metal Complexes 1 to 3 and Comparative Metal Complexes 1 to 2 synthesized by the methods described above. Polymerization conditions and polymerization results are presented in Tables 1 and 2, respectively. It should be noted that productivity and catalytic activity were calculated by the following equations:

[Math. 1]

$$\text{Productivity (g/mmol)} = \frac{\text{Yield (g) of resulting polymer}}{\text{Amount of substance (mmol) of metal complex catalyst used}}$$

[Math. 2]

$$\text{Catalytic activity (g/mmol·h)} = \frac{\text{Yield (g) of resulting polymer}}{\text{Amount of substance (mmol) of metal complex catalyst used} \times \text{reaction time (h)}}$$

Example 1: Homopolymerization of ethylene using Metal Complex 1 (preparation of Polymer 1)

Under a nitrogen gas atmosphere, toluene (50 mL) was added into a 120 mL autoclave containing Metal Complex 1 (3.5 mg, 0.0050 mmol). After charging ethylene (3.0 MPa), the autoclave was stirred at 80°C for 1 hour. After cooling to room temperature, a reaction liquid in the autoclave was added to methanol (300 mL) to precipitate a polymer. The resulting polymer was collected by filtration, washed with methanol, and then dried under reduced pressure to obtain Polymer 1. The yield was 19.1 g. The productivity was calculated as 3820 g/mmol and the catalytic activity was calculated as 3820 g/(mmol·h). The molecular weight of Polymer 1 was measured by size exclusion chromatography, and the number average molecular weight Mn was 27800, the weight average molecular weight Mw was 58700, and Mw/Mn was 2.11.

(Comparative Example 1): Homopolymerization of ethylene using Comparative Metal Complex 1 (preparation of Comparative Polymer 1)

Ethylene was homopolymerized in the same manner as in Example 1, except that the metal complex used was changed to Comparative Metal Complex 1. Polymerization conditions and polymerization results are presented in Tables 1 and 2, respectively.

(Example 2): Copolymerization of allyl acetate and ethylene using Metal Complexes 1 (preparation of Polymer 2)

Under a nitrogen gas atmosphere, toluene (63.4 mL) and allyl acetate (11.6 mL, 108 mmol) as the monomer represented by General Formula (1) were added to a 120 mL autoclave containing Metal Complex 1 (3.5 mg, 0.0050 mmol). After charging ethylene (4.0 MPa), the autoclave was stirred at 80°C for 1 hour. After cooling to room temperature, a reaction liquid in the autoclave was dried under reduced pressure to obtain Polymer 2. The yield was 2.33 g. The productivity was calculated as 466.7 g/mmol and the catalytic activity was calculated as 466.7 g/(mmol·h). The molecular

weight of Polymer 2 was measured by size exclusion chromatography, and the number average molecular weight Mn was 11200, the weight average molecular weight Mw was 26800, and Mw/Mn was 2.39. The content of allyl acetate in the copolymer was determined by $^1$H-NMR measurement as 100:1.4 in terms of the molar ratio of ethylene:allyl acetate (allyl acetate mole fraction = 1.4%). Polymerization conditions and polymerization results are presented in Tables 1 and 2, respectively.

(Examples 3 to 4): Copolymerization of allyl acetate and ethylene using Metal Complexes 2 to 3 (preparation of Polymers 3 and 4)

Copolymerization of allyl acetate and ethylene was performed in the same manner as in Example 2, except that the metal complex used was changed to Metal Complex 2 or 3. Polymerization conditions and polymerization results are presented in Tables 1 and 2, respectively.

(Comparative Examples 2 to 3): Copolymerization of allyl acetate and ethylene using Comparative Metal Complexes 1 to 2 (preparation of Comparative Polymers 2 to 3)

Copolymerization of allyl acetate and ethylene was performed in the same manner as in Example 2, except that the metal complex used was changed to Comparative Metal Complex 1 or 2. Polymerization conditions and polymerization results are presented in Tables 1 and 2, respectively.

(Examples 5 to 10): Homopolymerization of ethylene using Metal Complexes 4 to 9 (preparation of Polymers 5 to 10)

Ethylene was homopolymerized in the same manner as in Example 1, except that the metal complex used was changed to any one of Metal Complexes 4 to 9 and the amount of the catalyst charged was changed. Polymerization conditions and polymerization results are presented in Tables 1 and 2, respectively.

(Examples 11 to 16): Copolymerization of allyl acetate and ethylene using Metal Complexes 4 to 9 (preparation of Polymers 11 to 16)

Copolymerization of allyl acetate and ethylene was performed in the same manner as in Example 2, except that the metal complex used was changed to any one of Metal Complexes 4 to 9. Polymerization conditions and polymerization results are presented in Tables 1 and 2, respectively.

[Table 1]

Table 1

| Examples | Catalyst | | | Ethylene | General Formula (1) Allyl acetate | Solvent | | Reaction temperature | Reaction time |
|---|---|---|---|---|---|---|---|---|---|
| | Type | mg | mmol | MPa | mL (mmol) | Type | mL | °C | h |
| Example 1 | Metal Complex 1 | 3.5 | 0.005 | 3.0 | - | Toluene | 50 | 80 | 1 |
| Comparative Example 1 | Comparative Metal Complex 1 | 3.2 | 0.005 | 3.0 | - | Toluene | 50 | 80 | 1 |
| Example 2 | Metal Complex 1 | 3.5 | 0.005 | 4.0 | 11.6 (108) | Toluene | 63.4 | 80 | 1 |
| Example 3 | Metal Complex 2 | 3.4 | 0.005 | 4.0 | 11.6 (108) | Toluene | 63.4 | 80 | 1 |
| Example 4 | Metal Complex 3 | 3.3 | 0.005 | 4.0 | 11.6 (108) | Toluene | 63.4 | 80 | 1 |
| Comparative Example 2 | Comparative Metal Complex 1 | 3.2 | 0.005 | 4.0 | 11.6 (108) | Toluene | 63.4 | 80 | 1 |
| Comparative Example 3 | Comparative Metal Complex 2 | 2.8 | 0.005 | 4.0 | 11.6 (108) | Toluene | 63.4 | 80 | 1 |
| Example 5 | Metal Complex 4 | 0.27 | 0.0002 | 3.0 | - | Toluene | 50 | 80 | 1 |
| Example 6 | Metal Complex 5 | 0.38 | 0.0002 | 3.0 | - | Toluene | 50 | 80 | 1 |
| Example 7 | Metal Complex 6 | 0.36 | 0.0002 | 3.0 | - | Toluene | 50 | 80 | 1 |
| Example 8 | Metal Complex 7 | 0.21 | 0.0002 | 3.0 | - | Toluene | 50 | 80 | 1 |
| Example 9 | Metal Complex 8 | 0.17 | 0.0002 | 3.0 | - | Toluene | 50 | 80 | 1 |
| Example 10 | Metal Complex 9 | 0.30 | 0.0005 | 3.0 | - | Toluene | 50 | 80 | 1 |
| Example 11 | Metal Complex 4 | 2.7 | 0.005 | 4.0 | 11.6 (108) | Toluene | 63.4 | 80 | 1 |
| Example 12 | Metal Complex 5 | 3.8 | 0.005 | 4.0 | 11.6 (108) | Toluene | 63.4 | 80 | 1 |
| Example 13 | Metal Complex 6 | 3.6 | 0.005 | 4.0 | 11.6 (108) | Toluene | 63.4 | 80 | 1 |
| Example 14 | Metal Complex 7 | 5.2 | 0.005 | 4.0 | 11.6 (108) | Toluene | 63.4 | 80 | 1 |
| Example 15 | Metal Complex 8 | 4.1 | 0.005 | 4.0 | 11.6 (108) | Toluene | 63.4 | 80 | 1 |
| Example 16 | Metal Complex 9 | 3.0 | 0.005 | 4.0 | 11.6 (108) | Toluene | 63.4 | 80 | 1 |

[Table 2]

Table 2

| Examples | Polymer number | Yield | Productivity | Catalytic activity | Molecular weight | | | Allyl acetate unit content |
|---|---|---|---|---|---|---|---|---|
| | | g | g/mmol | g/(mmol·h) | Mn | Mw | Mw/Mn | mol% |
| Example 1 | Polymer 1 | 19.1 | 3820 | 3820 | 27800 | 58700 | 2.11 | 0 |
| Comparative Example 1 | Comparative Polymer 1 | 3.16 | 631 | 631 | 30100 | 63200 | 2.10 | 0 |
| Example 2 | Polymer 2 | 2.33 | 467 | 467 | 11200 | 26800 | 2.39 | 1.4 |
| Example 3 | Polymer 3 | 2.29 | 457 | 457 | 6700 | 16200 | 2.42 | 0.79 |
| Example 4 | Polymer 4 | 0.37 | 75 | 75 | 3500 | 9100 | 2.60 | 1.2 |
| Comparative Example 2 | Comparative Polymer 2 | 0.11 | 22 | 22 | 11100 | 22000 | 1.99 | 1.2 |
| Comparative Example 3 | Comparative Polymer 3 | 0.0013 | 0 | 0 | 800 | 1700 | 2.12 | 1.3 |
| Example 5 | Polymer 5 | 0.88 | 4392 | 4392 | 9000 | 19500 | 2.17 | 0 |
| Example 6 | Polymer 6 | 0.57 | 2860 | 2860 | 439900 | 959000 | 2.18 | 0 |
| Example 7 | Polymer 7 | 1.01 | 5035 | 5035 | 181900 | 382900 | 2.11 | 0 |
| Example 8 | Polymer 8 | 7.06 | 35300 | 35300 | 47000 | 97700 | 2.08 | 0 |
| Example 9 | Polymer 9 | 4.46 | 22300 | 22300 | 42800 | 122400 | 2.86 | 0 |
| Example 10 | Polymer 10 | 7.68 | 15360 | 15360 | 1900 | 3600 | 1.89 | 0 |
| Example 11 | Polymer 11 | 0.96 | 192 | 192 | 9100 | 19400 | 2.13 | 0.53 |
| Example 12 | Polymer 12 | 1.11 | 222 | 222 | 472000 | 1033000 | 2.19 | 0.33 |
| Example 13 | Polymer 13 | 4.82 | 963 | 963 | 218700 | 481200 | 2.20 | 0.48 |
| Example 14 | Polymer 14 | 12.8 | 2565 | 2565 | 40700 | 92300 | 2.27 | 0.31 |
| Example 15 | Polymer 15 | 3.60 | 720 | 720 | 62900 | 195000 | 3.10 | 0.36 |
| Example 16 | Polymer 16 | 0.38 | 76 | 76 | 1600 | 3200 | 2.00 | 0.55 |

In the homopolymerization of ethylene, in the case where Metal Complexes 1 and 4 to 9 were used (Examples 1 and 5 to 10), the productivity and the catalytic activity were improved as compared with the case where Comparative Metal Complex 1 was used (Comparative Example 1).

In the copolymerization of allyl acetate and ethylene, in the case where Metal Complexes 1 to 9 were used (Examples 2 to 4 and 11 to 16), the productivity and the catalytic activity were improved as compared with the case where Comparative Metal Complex 1 or 2 was used (Comparative Examples 2 to 3).

(Example 17): Copolymerization of allyl acetate and ethylene using Metal Complex 1 (preparation of Polymer 17)

For the purpose of making the content of allyl acetate in the copolymer of allyl acetate and ethylene about 20 mol%, copolymerization of allyl acetate and ethylene was attempted without using a solvent. In this case, allyl acetate also serves as a solvent. Under a nitrogen gas atmosphere, allyl acetate (75.0 mL) was added into a 120 mL autoclave containing Metal Complex 1 (7.0 mg, 0.010 mmol). After charging ethylene (1.6 MPa), the autoclave was stirred at 65°C for 24 hours. After cooling to room temperature, a reaction liquid in the autoclave was added to methanol (300 mL) to precipitate a polymer. The resulting polymer was collected by filtration, washed with methanol, and then dried under reduced pressure to obtain Polymer 17. The yield was 0.97 g. The productivity was calculated as 96.9 g/mmol and the catalytic activity was calculated as 4.0 g/(mmol·h). The molecular weight of Polymer 17 was measured by size exclusion chromatography, and the number average molecular weight Mn was 800, the weight average molecular weight Mw was 1,900, and Mw/Mn was 2.37. The content of allyl acetate in the copolymer was determined by $^1$H-NMR measurement as 100:26.1 in terms of the molar ratio of ethylene:allyl acetate (allyl acetate mole fraction = 20.7%). Polymerization conditions and polymerization results are presented in Tables 3 and 4, respectively.

Examples 18 to 19: Copolymerization of allyl acetate and ethylene using Metal Complexes 5 to 6 (preparation of Polymers 18 to 19)

Copolymerization of allyl acetate and ethylene was performed in the same manner as in Example 17, except that the metal complex used was changed to Metal Complex 5 or 6 and the pressure of ethylene to be charged was changed so that a mole fraction of allyl acetate in the copolymer was 20 mol%. Polymerization conditions and polymerization results are presented in Tables 3 and 4, respectively.

Comparative Examples 4 to 5: Copolymerization of allyl acetate and ethylene using Comparative Metal Complexes 1 to 2 (preparation of Comparative Polymers 4 to 5)

Copolymerization of allyl acetate and ethylene was attempted in the same manner as in Example 17, except that the metal complex used was changed to Comparative Metal Complex 1 or 2, but no polymer was formed. In Comparative Examples 4 and 5, a relative amount of allyl acetate was large, and thus, it is presumed that Comparative Metal Complex 1 and Comparative Metal Complex 2 were deactivated. Polymerization conditions and polymerization results are presented in Tables 3 and 4, respectively. No copolymer was obtained, and thus the measured values of the molecular weight and the allyl acetate unit content are blank.

[Table 3]

Table 3

| Examples | Catalyst | | | Ethylene | General Formula (1) Allyl acetate | Solvent | | Reaction temperature | Reaction time |
|---|---|---|---|---|---|---|---|---|---|
| | Type | mg | mmol | MPa | mL (mmol) | Type | mL | °C | h |
| Example 17 | Metal Complex 1 | 7.0 | 0.010 | 1.6 | 75.0 (695) | - | - | 65 | 24 |
| Example 18 | Metal Complex 5 | 7.7 | 0.010 | 0.4 | 75.0 (695) | - | - | 65 | 24 |
| Example 19 | Metal Complex 6 | 7.3 | 0.010 | 0.4 | 75.0 (695) | - | - | 65 | 24 |
| Comparative Example 4 | Comparative Metal Complex 1 | 6.3 | 0.010 | 1.6 | 75.0 (695) | - | - | 65 | 24 |
| Comparative Example 5 | Comparative Metal Complex 2 | 5.7 | 0.010 | 1.6 | 75.0 (695) | - | - | 65 | 24 |

[Table 4]

Table 4

| Examples | Polymer number | Yield | Productivity | Catalytic activity | Molecular weight | | | Allyl acetate unit content |
|---|---|---|---|---|---|---|---|---|
| | | g | g/mmol | g/ (mmol·h) | Mn | Mw | Mw/Mn | mol% |
| Example 17 | Polymer 17 | 0.97 | 96.9 | 4.0 | 800 | 1900 | 2.37 | 20.7 |
| Example 18 | Polymer 18 | 0.33 | 32.6 | 1.4 | 39900 | 96600 | 2.42 | 19.3 |
| Example 19 | Polymer 19 | 0.26 | 26.3 | 1.1 | 6800 | 15400 | 2.26 | 24.8 |
| Comparative Example 4 | Comparative Polymer 4 | 0.0 | 0.0 | 0.0 | - | - | - | - |
| Comparative Example 5 | Comparative Polymer 5 | 0.0 | 0.0 | 0.0 | - | - | - | - |

In the copolymerization of allyl acetate and ethylene in which the allyl acetate unit content in the copolymer was targeted for around 20 mol%, the productivity and the catalytic activity were improved in the case of using Metal Complexes 1, 5, or 6 (Examples 17 to 19) as compared with the case of using Comparative Metal Complex 1 or 2 (Comparative Examples 4 to 5).

From the above Examples and Comparative Examples, it has been found that the metal complex catalyst of the present disclosure has higher catalytic activity than that of the metal complex catalyst in the related art in the polymerization of an olefin containing an allyl monomer having a polar group. That is, the metal complex catalyst of the present disclosure can reduce the production cost of an olefin-based polymer containing an allyl monomer having a polar group.

**Claims**

**1.** A catalyst for olefin polymerization, comprising a metal complex represented by General Formula (C1):

[Chem. 1]

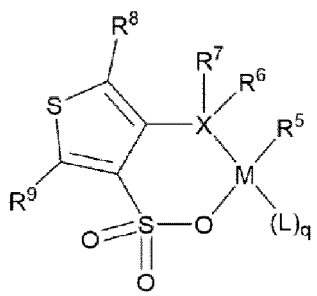

(C1)

where in General Formula (C1), M represents a palladium atom or a nickel atom; X represents a phosphorus atom (P); $R^5$ represents a substituent selected from the group consisting of a hydrogen atom, a halogen atom, a hydrocarbon group having 1 to 30 carbon atoms, a hydrocarbon group having 1 to 30 carbon atoms substituted with a halogen atom, a hydrocarbon group having 2 to 30 carbon atoms substituted with an alkoxy group having 1 to 10 carbon atoms, a hydrocarbon group having 7 to 30 carbon atoms substituted with an aryloxy group having 6 to 20 carbon atoms, a hydrocarbon group having 3 to 30 carbon atoms substituted with an amido group having 2 to 10 carbon atoms, an alkoxy group having 1 to 30 carbon atoms, an aryloxy group having 6 to 30 carbon atoms, and an acyloxy group having 2 to 10 carbon atoms; $R^6$ and $R^7$ each independently represent an alkoxy group, an aryloxy group, a silyl group, an amino group, or a hydrocarbon group having 1 to 180 carbon atoms optionally substituted

with one or more groups selected from a hydroxy group, a halogen atom, an alkoxy group, an aryloxy group, and an acyloxy group; $R^8$ and $R^9$ each independently represent a hydrogen atom or a halogen atom; and L represents an electron-donating ligand, and q is 0, 1/2, 1, or 2.

**2.** The catalyst for olefin polymerization according to claim 1, wherein $R^8$ and $R^9$ in General Formula (C1) are each independently a hydrogen atom or a chlorine atom.

**3.** The catalyst for olefin polymerization according to claim 2, wherein one of $R^8$ and $R^9$ in General Formula (C1) is a hydrogen atom, and the other is a chlorine atom.

**4.** The catalyst for olefin polymerization according to claim 2, wherein both of $R^8$ and $R^9$ in

**5.** The catalyst for olefin polymerization according to any one of claims 1 to 4, wherein $R^6$ and $R^7$ in General Formula (C1) are each independently an alkyl group, a fluoroalkyl group, a cycloalkyl group optionally having a substituent, an aralkyl group optionally having a substituent, or an aryl group optionally having a substituent.

**6.** The catalyst for olefin polymerization according to any one of claims 1 to 5, wherein both of $R^6$ and $R^7$ in General Formula (C1) are isopropyl groups, t-butyl groups, menthyl groups, 2,7-di-t-butyl-9-fluorenyl groups, diphenylmethyl groups, 2-methoxyphenyl groups, or 2-isopropylphenyl groups.

**7.** A method for producing an ethylene homopolymer, a copolymer of ethylene and an olefin having a polar group, or a copolymer of ethylene, the olefin having a polar group, and another monomer, the method comprising using a metal complex represented by General Formula (C1) as a polymerization catalyst:

[Chem. 2]

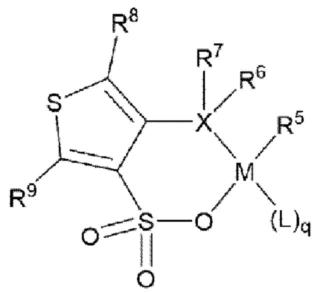

(C1)

where in General Formula (C1), symbols represent the same meanings as in claim 1, and the olefin is represented by General Formula (1):

[Chem. 3]

$$CH_2{=}CH{-}(CH_2)_n{-}R^1 \quad (1)$$

where in General Formula (1), $R^1$ represents a substituent selected from the group consisting of a hydroxy group, an alkoxy group having 1 to 10 carbon atoms, an aryloxy group having 6 to 20 carbon atoms, an acyl group having 2 to 10 carbon atoms, an ester group having 2 to 10 carbon atoms (oxycarbonyl group; R-O-(C=O)-, R represents an organic group), an acyloxy group having 2 to 10 carbon atoms, an amino group, a substituted amino group having 1 to 12 carbon atoms, a substituted amido group having 2 to 12 carbon atoms, a substituted pyridyl group having 5 to 10 carbon atoms, a substituted pyrrolidyl group having 4 to 10 carbon atoms, a substituted piperidyl group having 5 to 10 carbon atoms, a substituted hydrofuryl group having 4 to 10 carbon atoms, a substituted imidazolyl group having 4 to 10 carbon atoms, a mercapto group, an alkylthio group having 1 to 10 carbon atoms, an arylthio group having 6 to 10 carbon atoms, an epoxy group, and a halogen atom, and n is an integer selected from 0 to 6.

**8.** The method according to claim 7, wherein n in General Formula (1) is 0.

**9.** The method according to claim 7, wherein n in General Formula (1) is 1.

**10.** The method according to any one of claims 7 to 9, wherein $R^8$ and $R^9$ in General Formula (C1) are each independently a hydrogen atom or a chlorine atom.

**11.** The method according to claim 10, wherein one of $R^8$ and $R^9$ in General Formula (C1) is a hydrogen atom, and the other is a chlorine atom.

**12.** The method according to claim 10, wherein both of $R^8$ and $R^9$ in General Formula (C1) are chlorine atoms.

**13.** The method according to any one of claims 7 to 12, wherein $R^6$ and $R^7$ in General Formula (C1) are each independently an alkyl group, a fluoroalkyl group, a cycloalkyl group optionally having a substituent, an aralkyl group optionally having a substituent, or an aryl group optionally having a substituent.

**14.** The method according to any one of claims 7 to 13, wherein both of $R^6$ and $R^7$ in General Formula (C1) are isopropyl groups, t-butyl groups, menthyl groups, 2,7-di-t-butyl-9-fluorenyl groups, diphenylmethyl groups, 2-methoxyphenyl groups, or 2-isopropylphenyl groups.

## INTERNATIONAL SEARCH REPORT

International application No.
**PCT/JP2022/042873**

**A. CLASSIFICATION OF SUBJECT MATTER**

***C08F 4/80***(2006.01)i; ***C08F 10/02***(2006.01)i
FI: C08F4/80; C08F10/02

According to International Patent Classification (IPC) or to both national classification and IPC

**B. FIELDS SEARCHED**

Minimum documentation searched (classification system followed by classification symbols)

C08F4/80; C08F10/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2020/175482 A1 (THE UNIVERSITY OF TOKYO) 03 September 2020 (2020-09-03) entire text | 1-14 |
| A | WO 2019/093364 A1 (THE UNIVERSITY OF TOKYO) 16 May 2019 (2019-05-16) entire text | 1-14 |
| A | JP 2015-137282 A (THE UNIVERSITY OF TOKYO) 30 July 2015 (2015-07-30) entire text | 1-14 |
| A | JP 2014-159540 A (THE UNIVERSITY OF TOKYO) 04 September 2014 (2014-09-04) entire text | 1-14 |
| A | JP 2011-68881 A (THE UNIVERSITY OF TOKYO) 07 April 2011 (2011-04-07) entire text | 1-14 |
| A | CN 109021013 A (UNIV SCIENCE & TECHNOLOGY CHINA) 18 December 2018 (2018-12-18) entire text | 1-14 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/042873**

| Patent document cited in search report | Publication date (day/month/year) | Patent family member(s) | Publication date (day/month/year) |
|---|---|---|---|
| WO 2020/175482 A1 | 03 September 2020 | US 2022/0089791 A1<br>entire text<br>EP 3932955 A1<br>CN 113302213 A | |
| WO 2019/093364 A1 | 16 May 2019 | US 2020/0347159 A1<br>entire text<br>EP 3708593 A1<br>CN 111386288 A | |
| JP 2015-137282 A | 30 July 2015 | (Family: none) | |
| JP 2014-159540 A | 04 September 2014 | US 2015/0368376 A1<br>entire text<br>TW 201446808 A<br>KR 10-2015-0079765 A<br>CN 104936995 A | |
| JP 2011-68881 A | 07 April 2011 | US 2012/0116036 A1<br>entire text<br>US 2015/0051361 A1<br>TW 201124435 A<br>CN 102498137 A | |
| CN 109021013 A | 18 December 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011068881 A
- US 8916663 B
- JP 2014159540 A
- US 9499644 B
- JP 2015137282 A
- WO 2019093364 A
- WO 2020175482 A


### Non-patent literature cited in the description


- *Chem. Rev.,* 1958, vol. 58, 808
- *J. Am. Chem. Soc.,* 2011, vol. 133, 1232
- *J. Am. Chem. Soc.,* 2007, vol. 129, 8948